# EUROPÄISCHE PATENTSCHRIFT

(11) **EP 0 510 367 B1**
(45) Veröffentlichungstag und Bekanntmachung des Hinweises auf die Patenterteilung: **11.12.1996**
(21) Anmeldenummer: 92105049.8
(22) Anmeldetag: 24.03.1992
(51) Int. Cl.: G01D 5/20

(54) **Induktiver Stellungsgeber**
Inductive position sensor
Capteur inductif de position

(30) Priorität: 26.04.1991 DE 4113745
(43) Veröffentlichungstag der Anmeldung: 28.10.1992
(60) Teilanmeldung: 95103691.2
(73) Patentinhaber: Mehnert, Walter, Dr., D-85521 Ottobrunn (DE)
(72) Erfinder: Mehnert, Walter, Dr. Dipl.-Ing., W-8012 Ottobrunn (DE); Theil, Thomas, Dr. Dipl.-Ing., W-8133 Feldafing (DE)
(74) Vertreter: Strasser, Wolfgang, Dipl.-Phys

(56) Entgegenhaltungen:
- EP-A- 0 210 927
- DE-A- 2 511 683
- FR-A- 2 278 141
- US-A- 3 949 339

## Beschreibung

Die Erfindung betrifft einen induktiven Stellungsgeber der im Oberbegriff des Anspruches 1 beschriebenen Art.

Solche Stellungsgeber dienen dazu, ein elektrisches Signal zu erzeugen, mit dessen Hilfe eine ständige oder intermittierend auftretende Relativbewegung zwischen zwei Körpern so überwacht bzw. messend verfolgt werden kann, daß zu jedem beliebigen Zeitpunkt eine Information über die momentane Stellung des einen der beiden Körper bezüglich des anderen zur Verfügung steht.

Ein Ausführungsbeispiel sind Lineargeber, bei denen z. B. die bewegung und/oder momentane Stellung eines Maschinenschlittens, der gegenüber dem Maschinenrahmen verschiebbar ist, mit hoher Präzision erfaßt und gesteuert werden soll. Dazu ist es erforderlich, ständig ein Signal zu gewinnen, das auch dann, wenn sich der Schlitten mit hoher Geschwindigkeit bewegt, Auskunft über die momentane Position des Schlittens liefert.

Eine andere Ausführungsform stellen Drehgeber dar, mit deren Hilfe die momentane Winkellage eines rotierenden Körpers, beispielsweise des Rotors eines Elektromotors bezüglich des Stators, oder der Drehwinkel zwischen zwei gegeneinander verdrehbaren Körpern, beispielsweise der Azimut- oder Vertikalwinkel des Fernrohrs eines Theodoliten gemessen werden soll.

In ähnlicher Weise lassen sich mit Drehgebern die Winkelstellungen bzw. Drehgeschwindigkeiten von Kraftfahrzeugrädern oder die momentane Winkelstellung einer Vergaser-Drosselklappe messen.

Ein linearer Stellungsgeber der eingangs genannten Art ist der DE-PS 25 11 683 entnehmbar. Bei diesem bekannten Geber umfaßt die ferromagnetische Fluß-Führungsvorrichtung zwei rechteckige, längliche, ebene Platten, die zueiander parallel so angeordnet sind, daß sie zwischen ihren Flachseiten einen Luftspalt einschließen. An einer der beiden kurzen Rechteckssseiten sind diese Platten durch einen senkrecht zu den Plattenebenen verlaufenden Steg so verbunden, daß sich ein U-förmiger Längsschnitt ergibt. Dieser Steg erstreckt sich durch eine Erregerspule, die mit Wechselstrom gespeist wird, um einen Magnetfluß zu erzeugen, der über den Luftspalt hinweg einem ringförmig geschlossenen Weg folgen kann, wobei im Luftspalt ein in etwa homogenes Magnetfeld ausgebildet wird.

Diese Fluß-Führungsvorrichtung ist mit dem einen der beiden gegeneinander bewegbaren Körper verbunden, während mit dem anderen eine als gedruckte Schaltung ausgebildete Meßspulenanordnung gekoppelt ist, die zwei Meßspulen aufweist,von denen jede mehrere,jeweils ein Flächenelement umschließende Windungen umfaßt.

Die so gebildeten Flächenelemente besitzen unterschiedliche Größe und sind ineinander verschachtelt angeordnet. Insgesamt samt ergibt sich eine langgestreckte Meßspulenkonfiguration, die sich in Richtung der zu überwachenden Bewegung erstreckt und deren maximale Weite definiert. Die Trägerplatine der Meßspulen ist zwischen den beiden Platten der Fluß-Führungsvorrichtung und parallel zu diesen angeordnet. Die beiden einander gegenüberliegenden Wandflächen des zwischen den Platten gebildeten Luftspaltes konzentrieren den zwischen ihnen übertretenden Magnetfluß auf einen in etwa quaderförmigen Raumbereich, der die Fläche der Trägerplatine und damit der Meßspule in einer in etwa rechteckigen Durchtrittsfläche schneidet, deren Längsrichtung sich senkrecht zur Bewegungsrichtung quer über die gesamte Meßspulenanordnung erstreckt und deren Breite in Bewegungsrichtung wesentlich kürzer als die maximale Bewegungsweite ist. Dabei ist der Magnetfluß, der die Fluß-Führungseinrichtung und damit auch den in ihr gebildeten Luftspalt und die Durchtrittsfläche durchsetzt, unabhängig von der jeweiligen Stellung der beiden zu überwachenden Körper konstant.

Ein stellungsabhängiges Meßsignal kann dadurch gewonnen werden, daß bei einer Verschiebung des einen der beiden zu überwachenden Körper gegen den anderen die Durchtrittsfläche über die Flächenelemente der Meßspulenanordnung verschoben wird. Dadurch ändert sich der die einzelnen Windungen durchsetzende Magnetfluß und die Meßspulen liefern jeweils ein elektrisches Ausgangssignal, dessen Amplitude sich stellungsabhängig ändert. Die von den Meßspulen erzeugten Ausgangs-Wechselspannungssignale werden gleichgerichtet, so daß man veränderliche Gleichspannungssignale erhält, deren jeweilige Größe für die momentane Stellung, die der eine der beiden Körper bezüglich des anderen einnimmt, kennzeichnend ist. Zur Unterdrückung von Störeinflüssen und zur Erzeugung eines Ausgangssignals, das symmetrisch zu dem der Mittelstellung zugeordneten Nullpotential liegt, sind die beiden Meßspulen so ausgebildet und zueinander spiegelbildlich angeordnet, daß Bereiche der Durchtrittsfläche, die bei einer Bewegung der beiden Körper die Überdeckung mit der einen Meßspule verlassen, in eine Überdeckung mit der anderen Meßspule eintreten und umgekehrt; das Differenzsignal aus den Ausgangssignalen der beiden Meßspulen soll dabei über einen möglichst großen Teil des zu überwachenden Bewegungsbereiches möglichst exakt einem linearen Verlauf folgen. Bei Konfigurationen, bei denen eine andere Ausgangssignal-Charakteristik vorgegeben wird, ist es in entsprechender Weise wünschenswert, daß die durch die gewählte Konfiguration theoretisch vorgegebene Kennlinie über den gesamten Bewegungsbereich hinweg möglichst genau eingehalten wird.

Diese Forderung wird beim Stand der Technik nur in unzureichendem Maße erfüllt. So ist beispielsweise der DE-PS 25 11 683 ohne weiteres entnehmbar, daß der dort angestrebte lineare Verlauf der Ausgangssignal-Kennlinie bei Annäherung an die beiden Endlagen jeweils nicht in einer scharfen, sondern einer abgerundeten Spitze endet. Außerdem zeigt sich in der Praxis, daß die Kennlinie einer solchen Anordnung auch im Bereich des Nulldurchgangs nicht linear sondern S-förmig verzerrt verläuft. Zwar können diese Nichtliearitäten mit Hilfe der dem Geber nachgeschalteten Elektronik teilweise kompensiert werden. Dies erfordert jedoch einen zusätzlichen Aufwand und damit erhöhte Kosten.

Demgegenüber liegt der Erfindung die Aufgabe zugrunde, induktive Stellungsgeber der eingangs genannten Art so weiterzubilden, daß bei möglichst einfachem Aufbau und geringem Aufwand das unmittelbare Ausgangssignal des Gebers über einen möglichst großen Teil des Bewegungsbereiches mit möglichst großer Genauigkeit dem Konstruktions-Kennlinienverlauf folgt.

Zu Lösung dieser Aufgabe sieht die Erfindung die im Anspruch 1 niedergelegten Merkmale vor.

Diesen erfindungsgemäßen Maßnahmen liegt die Erkenntnis zugrunde, daß ein Teil der Schwierigkeiten, die sich beim Stand der Technik hinsichtlich der Meßgenauigkeit und des Auflösungsvermögens ergeben, weil die tatsächlich erzielte Ausgangssignal-Kennlinie vom theoretisch vorgegebenen Verlauf abweicht, darauf zurückzuführen ist, daß sowohl Streuanteile des von der Erregerspule erzeugten Magnetflusses als auch Feldinhomogenitäten insbesondere in den Randbereichen der Durchtrittsfläche auf die Meßspulenanordnung in Abhängigkeit von der zu überwachenden Bewegung veränderlich einwirken.

Um diese Störungen zu vermindern, hat es sich die Erfindung daher zum Ziel gesetzt, induktive Stellungsgeber so auszubilden, daß bei möglichst einfachem Aufbau ein maximaler, ungestörter und homogner die Meßspulenanordnung durchsetzender Magnetfluß erzielt wird.

Einen ersten wesentlichen Schritt in dieser Richtung stellt gemäß der Erfindung die Maßnahme dar, daß dem von der Erregerspule erzeugten Gesamtmagnetfluß wenigstens zwei ringförmig geschlossene Wege angeboten werden, von denen jeder einen unabhängig von der zu überwachenden Stellung etwa gleichen Teil des Gesamtmagnetflusses führt. Einer der beiden Wege dient dabei als Meßweg, d.h. er leitet auch den zur Erzeugung des Meßsignals verwendeten Nutz-Magnetfluß über den Spalt, der die Durchtrittsfläche definiert und in dessen Bereich das wenigstens eine Flächenelement der Meßspulenanordnung positioniert ist. Dem gegenüber dient wenigstens der weitere ringförmig geschlossene Weg als Ausgleichsweg und führt einen etwa gleich großen Teil des von der Erregerspule kommenden Magnetflusses so, daß er auf dieses wenigstens eine Flächenelement zumindest keinen bewegungs- bzw. stellungsabhängigen Einfluß ausüben kann.

Durch die erfindungsgemäße Ausbildung der Fluß-Führungsvorrichtung ist es möglich, die außerhalb der ringförmig geschlossenen Wege vorhandenen Streufelder im Vergleich zum Stand der Technik nicht nur stark zu vermindern und zu homogenisieren, sondern sie auch so zu gestalten, daß ihr Einfluß auf die Meßspulenanordnung - soweit er überhaupt noch vorhanden ist - sich in Abhängigkeit vcn der zu überwachenden Bewegung nur noch minimal ändert. Dadurch wird erreicht, daß der tatsächliche Kennlinienverlauf wesentlich exakter der durch die gewählte Konfiguration theoretisch vorgegebenen Kurve folgt, als dies bei den bekannten induktiven Stellungsgebern der Fall ist.

Die erfindungsgemäß vorgesehenen wenigstens zwei ringförmig geschlossenen Wege müssen nicht völlig voneinander getrennt sein. In den meisten Fällen erstrecken sich Meß- und Ausgleichswege in mehreren oder sogar den meisten ihrer Abschnitte durch die gleichen Bereiche der Fluß-Führungsvorrichtung. Es genügt, wenn sie jeweils einen Abschnitt aufweisen, der zu keinem der anderen Wege gehört, wobei im Idealfall dieser eine Abschnitt eines jeden Meßweges praktisch nur den die zugehörige Durchtrittsfläche definierenden Spalt umfaßt, in dessen Bereich wenigstens ein Flächenelement der Meßspulenanordnung angeornet ist, während der entsprechende Abschnitt eines jeden Ausgleichsweges seinen Magnetfluß gerade an allen diesen Flächenelementen vorbeiführt.

Zwar sind aus US-A- 3 949 339 induktive Drehgeber bekannt, bei denen durch die Fluß-Führungsvorrichtung dem von der Erregerspule erzeugten Magnetfluß neben dem Meßweg ein weiterer mit ferromagnetischem Material zumindest teilweise erfüllter Weg angeboten wird. Bei diesen bekannten Drehgebern sind aber die den Meßweg und den weiteren Weg durchsetzenden Anteile des Gesamtmagnetflusses nicht stellungsunabhängig gleich. Vielmehr wird das stellungsabhängige Meßsignal gerade dadurch erzeugt, daß in Abhängigkeit von der momentanen Winkelstellung wechselnde Anteile des Gesamtmagnetflusses einerseits über den Meßweg und andererseits über den weiteren Weg geführt werden, der somit nicht im Sinne der in der vorliegenden Beschreibung verwendeten Terminologie als Ausgleichsweg dienen kann. Dadurch, daß sich bei einer Drehbewegung dieser bekannten Drehgeber die Magnetfluß-Anteile in den verschiedenen Wegen ständig ändern, treten Kennlinienverzerrungen auf, die es unmöglich machen, die bei der erfindungsgemäßen Anordnung vorhandene Kennlinientreue auch nur näherungsweise zu erzielen.

Aus FR-A-2 278 141 ist ein Transformator mit veränderbarem Übersetzungsverhältnis bekannt, bei welchem dem Gesamtmagnetfluß, der von der Primärwicklung erzeugt wird, zwei zumindest teilweise von ferromagnetischem Material erfüllte Wege angeboten werden, nämlich ein erster Weg, der den ihn durchsetzenden Magnetflußanteil an der Sekundärwicklung vorbei zur Primärwicklung zurückführt, während der zweite Weg den Rückführpfad für den Magnetflußanteil bildet, der die Sekundärwicklung durchsetzt. Die Sekundärwicklung ist so verschiebbar, daß der erste Weg in seiner geometrischen Ausdehnung in dem Maße wächst, wie der zweite Weg kleiner wird und umgekehrt. Die stellungsabhängige Ausgangsspannung wird somit dadurch erzeugt, daß aufgrund der Verschiebung der Sekundärwicklung der magnetische Widerstand in dem einen der beiden Wege jeweils ab- und in dem anderen in entsprechendem Maße zunimmt. Dies steht in klarem Widerspruch zu den Merkmalen des Anspruches 1, nach denen sowohl der Magnetflußanteil, der den Meßweg durchsetzt, als auch der, der den Ausgleichsweg durchsetzt, stellungsunabhängig und überdies einander gleich sind.

Eine besonders starke Verminderung der Störeinflüsse erhält man, wenn man für eine möglichst hohe Symmetrie zwischen den wenigstens zwei zur Verfügung gestellten ringförmig geschlossenen Wegen sorgt.

Je nach konkreter Ausgestaltung, beispielsweise als Dreh- oder Lineargeber umfaßt diese möglichst große Symmetrie einen, mehrere oder alle der folgenden Aspekte: Meß- und Ausgleichsweg bzw. -wege können eine weitgehend gleiche oder zumindest ähnliche geometrische Konfiguration aufweisen und/oder in möglichst vielen Abschnitten die gleiche Magnetflußdichte haben. Insbesondere haben beide Arten von ringförmig geschlossenen Wegen den gleichen magnetischen Widerstand. Vorzugsweise wird dies dadurch erreicht, daß auch im Ausgleichsweg ein Spalt vorgesehen wird, dessen magnetischer Widerstand in etwa gleich dem magnetischen Widerstand des Spaltes im Meßweg ist.

Prinzipiell kann auch der im Ausgleichsweg vorgesehene Spalt zur Gewinnung eines Meßsignals genutzt werden. Im Falle eines Drehgebers dürfen dann an die Meßgenauigkeit keine extremen Anforderungen gestellt werden. Zu diesem Zweck wird im Bereich dieses Spaltes eine weitere Meßspule angeordnet, die entweder eigene Ausgangsanschlüsse aufweist oder mit der Meßspule, die im Bereich des Spaltes des eigentlichen Meßweges liegt, elektrisch leitend verbunden ist. In beiden Fällen wird dafür gesorgt, daß sich die in den beiden Meßspulen erzeugte Spannungen addieren, so daß sich ein größerer Signalhub zwischen minimalem und maximalem Ausgangssignal ergibt.

Das erfindungsgemäße Konzept von wenigstens zwei ringförmig geschlossenen, magnetisch symmetrischen Wegen für den von der Erregerspule erzeugten Magnetfluß läßt sich bei zwei grundsätzlich verschiedenen Arten von induktiven Stellungsgebern anwenden:
Bei der einen Variante sind die Erregerspule, der Kern der Erregerspule und die Meßspulenanordnung mit dem einen der beiden gegeneinander bewegbaren Körper zumindest in Richtung der zu überwachenden Bewegung und vorzugweise völlig fest verbunden. Die Fluß-Führungsvorrichtung umfaßt dann außer dem Kern auch noch ein Joch, das vom Kern durch wenigstens einen Spalt getrennt ist, so daß es sich gegen diesen bewegen kann. Dieses Joch, das zum ringförmigen Schließen der wenigstens zwei Wege für den Magnetfluß dient, ist mit dem anderen der beiden gegeneinander bewegbaren Körper verbunden. Von den zwischen ihm und dem Kern vorzugsweise vorhandenen drei Spalten liegt einer in dem einen, ein anderer in dem anderen der beiden ringförmig geschlossenen Wege, während der dritte in gleicher Weise in beiden Wegen liegt und lediglich aus Gründen der Bewegbarkeit des Jochs gegen den Kern vorgesehen ist.

Zumindest im Bereich des im Meßweg vorgesehenen Spalts ist eine Meßspulenanordnung in der für die Erzeugung eines Meßsignals erforderlichen, oben beschriebenen Weise positioniert.

Ein Vorteil dieser ersten Variante besteht darin, daß der Kern gleichzeitig als mechanisches Lager für die Erregerspule und die Meßspulenanordnung dienen kann, da alle diese Teile mit ein und demselben der beiden gegeneinander bewegbaren Körper verbunden sind. Von besonderer Wichtigkeit ist darüberhinaus, daß Meß- und Ausgleichsweg streng voneinander getrennt sind.

Bei einer zweiten Variante ist zumindest die Meßspulenanordnung und vorzugsweise auch die Erregerspule mit dem einen der beiden gegeneinander bewegbaren Körper verbunden, während die Fluß-Führungsvorrichtung einen einheitlichen Körper bildet, der mit dem anderen der beiden gegeneinander bewegbaren Körper fest verbunden ist. Die Fluß-Führungsvorrichtung kann zwar aus Fertigungs- und Montagegründen aus mehreren Teilen bestehen, die aber im zusammengebauten Zustand fest miteinander verbunden sind und sich aufgrund der zu überwachenden Bewegung gemeinsam gegen die Meßspulenanorndung verschieben, für die in diesem Fall eine Ausbildung als gedruckte Schaltung besonders vorteilhaft ist. Die hierfür benötigte Platine kann dann gleichzeitig als Träger für die vorzugsweise ebenfalls als gedruckte Schaltung aufgebaute Erregerspule dienen.

Diese zweite Variante benötigt nur die zwei Spalte, die in den wenigstens zwei ringförmig geschlossenen Wegen angeordnet sind. Da jeder Spalt einen magnetischen Widerstand darstellt,hat die Einsparung eines Spaltes einen größeren Magnetfluß zur Folge, sodaß bei gleicher Eingangsleistumg eine größere Ausgangssignalamplitude erreicht wird. Der Gesamtwiderstand für den Nutzfluß ist somit geringer, so daß sich ein günstigeres Nutz-/Streufluß-Verhältnis ergibt. Darüberhinaus sind die beiden auch hier vorhandenen Spalte in dem sich als Ganzes bewegenden Körper der Fluß-Führungsvorrichtung ausgeformt, so daß ihre Form und insbesondere ihre Weite von der zu überwachenden Bewegung völlig unabhängig sind. Dies kann bei der ersten Variante nur durch eine vergleichsweise aufwendige Lagerung und Führung der gegeneinander beweglichen Teile der Fluß-Führungsvorrichtung erreicht werden. Da hier der zentrale, die Erregerspule durchsetzende Teil der Flußführungsvorrichtung keinen Luftspalt aufweist, hält er Fremdstörungen von den Meßspulen fern. Außerdem ist eine optimale Symmetrie zwischen Meß- und Ausgleichsweg gegeben.

Durch geeignete Ausbildung und Dimensionierung der vom Magnetfluß zu durchsetzenden Flächenelemente der Meßspulenanordnung kann erreicht werden, daß bei "standardmäßiger" Lagerung auftretende Exzentrizitäten und/oder Lagerspieleffekte zwischen der Fluß-Führungsvorrichtung und der Meßspulenanordnung das Meßsignal nur unwesentlich beeinflussen. Daher müssen bei der zweiten Variante an die Lagerung der gegeneinander beweglichen Teile des induktiven Stellungsgebers erheblich geringerer Anforderungen gestellt werden.

Ein Vorteil beider Varianten ist darin zu sehen, daß die Meßspulenanordnung und die Erregerspule immer gemeinsam mit demjenigen der beiden gegeneinander beweglichen Körper verbunden werden können, der im jeweiligen Anwendungsfall als feststehend zu betrachten ist, d. h. sich gegen die Ansteuer- und Auswerteelektronik nicht bewegt. An dem anderen Körper, der sich gegen diese Elektronik verschiebt, ist nur das Joch bzw. die gesamte Fluß-Führungsvorrichtung befestigt; diese Komponenten benötigen aber keine elektrischen Verbindungsleitungen, so daß Koppeleinrichtungen entfallen können, die aus dem Stand der Technik bekannte Drehgeber benötigen, bei denen die Erregerspule mit dem einen und die Meßspulenanordnung mit dem anderen der beiden gegeneinander bewegbaren Körper verbunden ist.

Bei beiden Varianten können die Form und die relative Anordnung sowohl der die Spalte begrenzenden Wandflächen und damit der Durchtrittsflächen als auch der Flächenelemente der Meßspulenanordnung innerhalb weiter Grenzen variiert und an den jeweiligen Anwendungsfall optimal angepaßt werden. Dabei ist es insbesondere möglich, den Verlauf, den das Meßspulen-Ausgangssignal bzw. das von ihm durch Demodulation abgeleitete Gleichspannungssignal nimmt, wenn die beiden zu überwachenden Körper eine bestimmte Relativbewegung ausführen, in unterschiedlichster Weise vorzugeben. So kann z. B. erreicht werden, daß bei ein und derselben Verschiebungsbewegung zwischen den beiden zu überwachenden Körpern das demodulierte Ausgangssignal eine Sinusperiode, mehrere Sinusperioden, einen linearen Anstieg, einen linearen Anstieg und einen entsprechenden linearen Abfall, mehrere derartige symmetrische oder asymmetrische Dreieckskurven oder beliebige Teile solcher Kurven durchläuft.

Hat das Ausgangssignal bei einer Relativverschiebung der beiden Körper über eine größere Strecke bzw. einen größeren Winkel die gleiche Kurvenform in periodischer Weise mehrfach, so entsteht hierdurch zwar hinsichtlich der Lage des einen der beiden Körper bezüglich des anderen eine Unbestimmtheit, die aber in vielen Anwendungsfällen nicht störend ist. Wird z. B. ein Drehgeber dazu verwendet, nach einem Drehwinkel von jeweils 90° ein bestimmtes Steuersignal zu erzeugen, so müssen zwar, wie dies durch die erfindungsgemäße Anordnung möglich ist, diese 90° sehr gut aufgelöst werden; der Absolutwinkel, d.h. welches der vier aufeinanderfolgenden 90°-Segmente gerade durchlaufen wird, ist jedoch ohne Bedeutung.

Durch die Maßnahme, zumindest zwei ringförmig geschlossene Wege für den von der Erregerspule erzeugten Magnetfluß anzubieten und wenigstens einen dieser Wege zur Erzeugung eines Meßsignals zu nutzen, lassen sich die Streufelder stark reduzieren, wobei der verbleibende Rest weitgehend homogenisiert wird. In den Randbereichen des Spaltes, dem das wenigstens eine Flächenelement zugeordnet ist, das von der von den Spaltwänden definierten Durchtrittsfläche in veränderbarer Weise überdeckt wird, werden aber immer gewisse Feldinhomogenitäten auftreten, deren Einfluß auf das Meßergebnis durch die folgenden Maßnahmen jedoch beseitigt bzw. stark vermindert kann: Zunächst ist es vorteilhaft, wenn das wenigstens eine Flächenelement und die Durchtrittsfläche gleiche Form besitzen und so angeordnet sind, daß ihre Randlinien zueinander in etwa parallel verlaufen. Bei einer besonders bevorzugten Ausführungsform sind das wenigstens eine Flächenelement und die Durchtrittsfläche in etwa vierseitig ausgebildet und so angeordnet, daß sich ein Randlinienpaar sowohl des Flächenelements als auch der Durchtrittsfläche in etwa parallel zu der Richtung erstreckt, in der sich die Durchtrittsfläche gegen das Flächenelement verschiebt, während das jeweils zweite Randlinienpaar zu dieser Richtung in etwa senkrecht verläuft.

Das erstgenannte Randlinienpaar hat dann vorzugsweise für das wenigstens eine Flächenelement einen deutlich kleineren oder, was besonders vorteilhaft ist, einen deutlich größeren Abstand als das zugehörige Randlinienpaar der Durchtrittsfläche.

Im ersten Fall befinden sich die betreffenden Ränder des Flächenelements im Homogenitätsbereich des im Spalt übertretenden Magnetflusses, dessen inhomogene Anteile das Flächenelement somit nicht durchsetzen und daher auch zum Meßsignal und seinen Änderungen nichts beitragen können. Voraussetzung hierfür ist allerdings, daß Lagerung und Führung des Jochs bzw. der gesamten Fluß-Führungsvorrichtung bezüglich der Meßspulenanordnung so präzise gestaltet werden, daß quer zur Verschiebungsrichtung auftretende Schwankungsbewegungen so klein sind, daß die Seitenränder des Flächenelementes den Homogenitätsbereich des Magnetflusses nie verlassen.

Im zweiten Fall besteht diese Einschränkung nicht, weil hier die betreffenden Abmessungen des Flächenelements gegenüber der Durchtrittsfläche so groß gewählt werden können, daß die inhomogenen Magnetfeldanteile, soweit sie das Meßsignal aufgrund ihrer nach außen exponentiell abfallenden Stärke überhaupt noch zu beeinflussen vermögen, auch dann innerhalb des Flächenelementes bleiben, wenn bei weniger aufwendiger Lagerung und Führung Schwankungsbewegungen quer zur Verschiebungsrichtung auftreten.

Für die Randlinien des wenigstens einen Flächenelementes und der Durchtrittsfläche, die senkrecht zur Verschiebungsrichtung verlaufen, gelten etwas andere Überlegungen: Hier besteht die eine Möglichkeit darin, das wenigstens eine Flächenelement und die Durchtrittsfläche in Bewegungsrichtung gegeneinander versetzt anzuordnen und so groß auszubilden, daß in allen Stellungen, die die beiden zu überwachenden Körper zueinander einnehmen können, die eine, quer zur Verschiebungsrichtung verlaufende Randlinie der Durchtrittsfläche immer außerhalb des wenigstens einen Flächenelementes bleibt, während sich die gegenüberliegende Randlinie der Durchtrittsfläche immer innerhalb dieses Flächenelementes bewegt, und außerdem die tatsächlich auftretende Bewegungsweite so zu beschränken, daß sich die quer verlaufenden Randlinien der Durchtrittsfläche niemals so weit an die zugehörigen Randlinien des Flächenelementes annähern, daß die an diesen Spalträndern vorhandenen Feldinhomogenitäten eine Rolle spielen können. Die eine quer verlaufende Randlinie des wenigstens einen Flächenelementes befindet sich hier also immer im Homogonitätsbereich des im Spalt übertretenden Magnetflusses, während die "gegenüberliegende" Randlinie des Flächenelementes immer so weit außerhalb des Spalts bleibt, daß sämtliche inhomogenen Feldanteile, die eine halbwegs relevante Stärke besitzen, in jeder möglichen Stellung der beiden Körper mit umfaßt werden. Das bedeutet allerdings, daß die Anordnung in Bewegungsrichtung deutlich größer sein muß als die maximal nutzbare Bewegungsweite.

Bei Drehgebern, mit denen Winkel von 360° oder mehr überwacht werden sollen, ist die eben genannte Bedingung nicht einzuhalten. Daher werden hier, wie auch in all den Fällen, wo die Länge der Anordnung in Bewegungsrichtung möglichst kurz sein soll, die Abmessungen des wenigstens einen Flächenelementes und der Durchtrittsfläche in Verschiebungsrichtung gleich gewählt. Eine Verminderung des Einflusses, den Streufelder und Inhomogenitäten an den sich quer zur Bewegungsrichtung erstreckenden Rändern der Durchtrittsfläche bzw. des Flächenelementes ausüben können, wird hier dadurch erreicht, daß der oder die Leiterabschnitte der Meßspule, die das wenigstens eine Flächenelement an diesen Rändern begrenzen, vollständig in ferromagnetisches Material eingebettet werden.

Man erhält dadurch eine definierte Flußteilung, d.h. ob bei gegebener Stellung eine Feldlinie das Flächenelement der Meßspule durchsetzt oder nicht hängt einzig und allein davon ab, welche Lage der Leiter , der hier das Flächenelement begrenzt, bezüglich der Durchtrittsfläche einnimmt, nicht jedoch von den Materialien der Umgebung. Dadurch laßt sich die Kennlinientreue weiter verbessern.

Die Verwendung einer Leiterumgebung, die in der Weise homogenisiert ist, daß sie völlig von ferromagnetischem Material erfüllt ist, ist insbesondere deswegen vorteilhaft, weil sie zu einer optimalen Homogenisierung des zur Messung verwendeten Magnetflusses führt. Außerdem läßt sich ein kleinerer Luftspalt erzielen, der einen geringeren magnetischen Widerstand aufweist, was zu einem größeren Magnetfluß und einer besseren Koppelung führt, so daß bei gleicher Eingangsleistung ein höheres Ausgangssignal erzielt wird. Die Streueffekte werden verringert und es ergibt sich ein besseres Verhältnis von Nutz- zu Streufluß.

Dies hat seine Ursachen einerseits darin, daß die "homogenisierten" Streufelder einen kleineren Einfluß haben, weil der Widerstand für den Nutzfluß kleiner ist, und andererseits darin, daß die Randeffekte eine kleinere örtliche Ausdehnung aufweisen.

Außerdem vermindert sich die Antennenwirkung der Meßspulenanordnung sowohl hinsichtlich des Aussendens als auch des Empfangs von Störsignalen.

Ein besonders geringer magnetischer Widerstand läßt sich für den dem wenigstens einen Flächenelement zugeordneten ringförmig geschlossenen Weg dadurch erzielen, daß ein Füllkörper aus ferromagnetischem Material vorgesehen ist, der zwischen den einander gegenüberliegenden Wandflächen des Spaltes angeordnet ist und dessen lichte Weite weitgehend überbrückt. Dieser Füllkörper ist fest mit der Meßspulenanordnung verbunden und überdeckt die Fläche des wenigstens einen Flächenelementes möglichst weitgehend. Bei der Variante, bei der Kern mit der Meßspulenanordnung fest verbunden ist, kann dieser Füllkörper ein integraler Bestandteil des Kerns sein, der durch die Meßspulenwicklung(en) hindurch in Richtung des Jochs vorsteht. Bei der anderen Variante ist der Füllkörper von der Fluß-Führungsvorrichtung völlig getrennt, da sich diese als ganzes gegen die Meßspulenanordnung und den mit dieser fest verbundenen Füllkörper bewegen muß. Der Füllkörper kann dabei von der Trägerplatine der Meßspulenanordnung gehalten werden.

Im Prinzip können sich die einander gegenüberliegenden Flächen von Füllkörper und Joch bzw. von Füllkörper und Fluß-Führungsvorrichtung berühren. Die elektromagnetische Funktion des induktiven Stellungsgebers ist dann optimal. Ein gewisser, möglichst kleiner Abstand zwischen diesen sich gegeneinander bewegenden Flächen ist allenfalls aus mechanischen Gründen insbesondere zur Vermeidung von Abriebs- oder Reibungs- und Bremseffekten wünschenswert.

Weitere vorteilhafte Ausgestaltungen der Meßspulenanordnung sind in den abhängigen Ansprüchen niedergelegt.

Die Erfindung wird im folgenden anhand von Ausführungsbeispielen unter Bezugnahme auf die Zeichnung beschrieben; in dieser zeigen:
- Fig. 1: in auseinandergezogener Darstellung einen Drehgeber, bei dem der Kern der Fluß-Führungsvorrichtung drehfest mit der Erreger- und Meßspulenanordnung verbunden ist, während sich das Joch gegen den Kern und die Meßspulenanordnung dreht,
- Fig. 2: einen Schnitt längs der Linie II-II durch den zusammengebauten Drehgeber aus Fig. 1,
- Fig. 3: in auseinandergezogener Darstellung einen Drehgeber, bei dem sich die gesamte Flußführungs-Vorrichtung gegen die Spulenanordnung dreht,
- Fig. 4: einen Schnitt durch den zusammengebauten Drehgeber aus Fig. 3 längs der Linien IV-IV,
- Fig. 5: in auseinandergezogener Darstellung einen Linargeber, bei dem sich das Joch gegen den Kern und die mit diesem fest verbundene Spulenanordnung verschiebt,
- Fig. 6: einen Schnitt durch den zusammengebauten Lineargeber aus Fig. 5 längs der Linie VI-VI,
- Fig. 7: einen Drehgeber mit beweglichem Joch, bei dem ein kleiner, periodisch wiederkehrender Winkelbereich messend erfaßt und aufgelöst wird, insbesondere zur Verwendung bei Kfz-Antiblockiersystemen,
- Fig. 8: eine Meßspulenanordnung für einen Drehgeber mit einem innenliegenden geschlossenen Leiter und nach außen geführten Ausgangsanschlüssen,
- Fig. 9: eine Meßspulenanordnung für einen Drehgeber mit einem außenliegenden geschlossenen Leiter und nach innen geführten Ausgangsanschlüssen,
- Fig. 10: eine Meßspulenanordnung für einen Drehgeber mit zwei einen gemeinsamen Randleiter besitzenden Flächenelementen, deren Ausgangssignale über vier Ausgangsanschlüsse abgegriffen werden, und
- Fig. 11: eine Meßspulenanordnung für einen Drehgeber mit zwei um 90° gegeneinander verdrehten Meßspulengruppen, die einen gemeinsamen inneren geschlossenen Leiter besitzen.

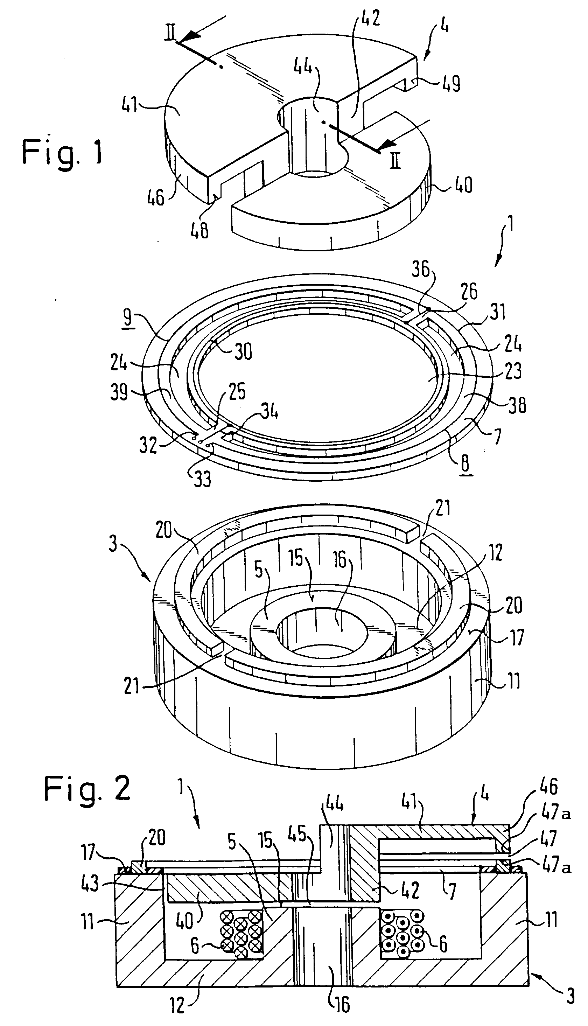

Der in Fig. 1 und 2 dargestellte Drehgeber 1 umfaßt eine Fluß-Führungsvorrichtung aus ferromagnetischem Material, die aus einem in Form eines Topfes ausgebildeten Kern 3 und einem Joch 4 besteht, eine um einen Zapfen 5 des Kerns 3 gewickelte Erregerspule 6 (in Fig. 1 weggelassen), und eine Trägerplatine 7, auf deren einen Flachseite zwei Meßspulen 8, 9 in Form von gedruckten Schaltungen aufgebracht sind.

Der Kern 3 ist ein hohler Kreiszylinder mit einer Zylinderwand 11, die mit einem Boden 12 einstückig verbunden ist. Von der Innenseite des Bodens 12 erstreckt sich der ebenfalls einstückig angeformte Zapfen 5, der als Kreiszylinder ausgebildet und konzentrisch zur Zylinderwand 11 angeordnet ist, über eine solche Höhe, daß der Abstand seiner in den Fig. 1 und 2 oben liegende Stirnfläche 15 von der durch die Stirnfläche 17 der Zylinderwand 11 definierten Ebene etwas größer ist als die axiale Dicke der weiter unten noch genauer beschriebenen unteren Halbkreisscheibe 40 des Joches 4. Der Zapfen 5 und der Boden 12 sind von einer zentralen durchgehenden Bohrung 16 durchzogen, die zur Aufnahme einer nicht dargestellten Welle dienen kann.

Auf der Stirnfläche 17 der Zylinderwand 11 ist eine kreisringförmige, konzentrisch angeordnete, in den Figuren nach oben vorspringende Rippe 20 vorgesehen, die einen in etwa quadratischen Querschnitt besitzt und etwa in der Mitte zwischen innerer und äußerer Umfangskante der Stirnfläche 17 verläuft. An zwei gegeneinander um 180° versetzten Stellen ist die Rippe 20 von zwei Ausnehmungen 21 durchbrochen, die sich bis zur Stirnfläche 17 erstrecken.

Die Trägerplatine 7 ist in Form eines Kreisringes ausgebildet, wobei der Durchmesser ihrer zentralen Öffnung 23 gleich oder etwas größer als der Innendurchmesser und ihr Außendurchmesser etwas kleiner als der Außendurchmesser der Zylinderwand 11 sind. Weiterhin besitzt die Trägerplatine 7 zwei teil-kreisringförmige durchgehende Öffnungen 24,24, die konzentrisch so angeordnet sind, daß sie sich fast zu einer kreisringförmigen Öffnung ergänzen, die lediglich an zwei einer gegenüberliegenden Stellen durch einen schmalen Verbindungssteg 25, 26 unterbrochen ist. Die Öffnungen 24, 24 und die Verbindungsstege 25, 26 sind so angeordnet und dimensioniert, daß die Trägerplatine 7 auf die Stirnfläche 17 aufgesetzt werden kann, wobei sich die beiden Teile der Rippe 20 durch die Öffnungen 24 hindurcherstrecken und die Verbindungsstege 25 und 26 in den Ausnehmungen 21 verlaufen. Auf diese Weise ist die Trägerplatine 7 drehfest mit dem Kern 3 verbunden.

Die auf der in den Fig. 1 und 2 oben liegenden Seite der Trägerplatine 7 befindlichen Meßspulen 8, 9 umfassen zwei kreisförmige, konzentrisch angeordnete Leiter 30, 31, von denen sich der innere innerhalb und der äußere außerhalb der Öffnungen 24, 24 befindet. Der innere Leiter 30 ist vollständig geschlossen, während der äußere Leiter 31 eine kleine Unterbrechung aufweist, an der seine Enden mit zwei in etwa radial und zueinander parallel nach außen verlaufenden Anschlußleitern 32, 33 verbunden sind. Zwischen diesen beiden Anschlußleitern 32, 33 für den äußeren Leiter 31 und parallel zu ihnen erstreckt sich über den Verbindungssteg 25 ein radial verlaufender Anschlußleiter 34 für den inneren Leiter 30. Über den diametral gegenüberliegendenVerbindungssteg 26 erstreckt sich ein radial verlaufender Verbindungsleiter 36, der die Leiter 30, 31 elektrisch leitend miteinander verbindet.

Somit umschließen die beiden Meßspulen 8, 9, von denen jede aus einer einzigen Windung besteht, zwei halbkreisringförmige Flächenelemente 38, 39, die hier in einer Ebene liegen, sich zu einem praktisch geschlossenen Kreisring ergänzen und zwei gemeinsame Randstücke aufweisen, die von dem mittleren Anschlußleiter 34 und dem Verbindungsleiter 36 gebildet werden.

Das Joch 4 besteht im wesentlichen aus zwei halbkreisförmigen Scheiben 40, 41, die unterschiedliche Radien besitzen und so angeordnet sind, daß ihre sich längs des Kreisdurchmessers ersteckenden Kanten in Draufsicht unmittelbar nebeneinander verlaufen und die beiden Kreisbögen voneinander wegorientiert sind. In axialer Richtung sind die Scheiben 40, 41 voneinander im Abstand angeordnet und durch ein halb-kreiszylindrisches Verbindungsstück 42 miteinander verbunden. Der Radius der Halbkreisscheibe 40 ist etwas kleiner als der Innenradius der Zylinderwand 11, während der Radius des halbzylindrischen Verbindungsstücks 42 dem Radius des Zapfens 5 entspricht. Die in den Figuren untere Fläche der unteren Halbkreisscheibe 40 fluchtet mit der unteren Stirnfläche des Verbindungsstücks 42, dessen obere Stirnfläche mit der oberen Fläche der oberen Halbkreisscheibe 41 in einer Ebene liegt.

Konzentrisch zu den beiden Halbkreisscheiben 40, 41 und dem halbzylindrischen Verbindungsstück 42 erstreckt sich durch diese Teile in axialer Richtung eine Bohrung 44, die den gleichen Durchmesser wie die Bohrung 16 im Zapfen 5 aufweist. Im zusammengebauten Zustand ist das Joch 4 so angeordnet, daß die beiden Bohrungen 16, 44 miteinander fluchten und die untere Halbkreisscheibe 40 so innerhalb der Zylinderwand 11 des Kerns 3 angeordnet ist, daß ihre in Fig. 2 obere Fläche mit der Stirnfläche 17 der Zylinderwand 11 fluchtet.

Der Radius der oberen Halbkreisscheibe 41 ist gleich dem Aussenradius der Rippe 20. An ihrer in den Fig. 1 und 2 unteren Seite besitzt die obere Halbkreisscheibe 41 eine nach unten vorspringenden Rippe 46, die sich über den gesamten Umfang der Halbkreisscheibe 41 erstreckt und die gleichen Abmessungen wie die Rippe 20 aufweist. Im zusammengebauten Zustand liegen sich die nach unten weisende Stirnfläche der oberen Rippe 46 und ein entsprechend großer Teil der oberen Stirnfläche der unteren Rippe 20 mit einem geringen Abstand gegenüber, so daß diese beiden Stirnflächen zwischen sich einen von Wandflächen 47a, 47a begrenzten Spalt 47 einschließen, der in Wirklichkeit wesentlich kleiner sein kann, als dies in Fig. 2 der Deutlichkeit halber dargestellt ist. Der Luftspalt 43 zwischen der zylindrischen Außenfläche der unteren Scheibe 40 und der Innenfläche der Zylinderwand 11 ist so gewählt, daß sich durch ihn derselbe magnetische Widerstand ergibt wie durch den Spalt 47. Auch der Luftspalt 45 zwischen der Unterseite der Scheibe 40 und des Verbindungsstücks 42 einerseits und der oberen Stirnfläche 15 des Zapfens 5 andererseits wird möglichst klein ausgebildet.

Demgegenüber ist der freie Abstand zwischen der zylindrischen Außenwand des Verbindungsstücks 42 und der gegenüberliegenden Innenfläche der Zylinderwand 11 so groß, daß hier ein großer magnetischer Widerstand vorhanden ist.

Wird nun der Erregerspule 6 über nicht dargestellte Anschlüsse eine Wechselspannung zugeführt, so erzeugt sie einen magnetischen Fluß, dem durch die beschriebene Ausbildung des Kerns 3 und des Joches 4 zwei ringförmig geschlossene Wege angeboten werden, die zwar geometrisch unterschiedlich ausgebildet sind, aber im wesentlichen die gleichen magnetischen Widerstände aufweisen. Der eine dieser beiden in ihrer Geometric stellungsunabhängigen Wege verläuft von dem die Erregerspule 6 durchsetzenden Zapfen 5 über den Spalt 45 in das halbzylindrische Verbindungsstück 42, durch die obere halbkreisförmige Scheibe 41, die Rippe 46, den Spalt 47, die Rippe 20, die Zylinderwand 11 und über den Boden 12 zurück zum Zapfen 5. Der sich längs dieses Meßweges ausbreitende Magnetfluß ist unabhängig von der Winkelstellung Konstant und durchsetzt immer wenigstens eine der beiden Meßspulen 8, 9, im allgemeinen aber beide Meßspulen mit unterschiedlichen Anteilen, deren jeweilige Größe von der momentanen Stellung des Joches 4 bezüglich des Kerns 3 abhängt.

Der andere ringförmig geschlossene Weg erstreckt sich vom Zapfen 5 über den Spalt 45, durch die untere halbkreisförmige Scheibe 40, über den Spalt 43 unmittelbar in die Zylinderwand 11 und durch den Boden 12 zurück zum Zapfen 5. Der ebenfalls stellungsunabhängige magnetische Fluß in diesem ringförmig geschlossenen Ausgleichsweg bleibt immer unterhalb der Ebenen der Meßspulen 8, 9 und kann diese nicht durchsetzen. Da nun der Kern 3 und die Meßspulen-Trägerplatine 7 mit dem einen der beiden nicht dargestellten Körper, deren gegenseitige Drehbewegung überwacht werden soll, drehfest verbunden ist, während das Joch 4 mit dem anderen dieser beiden Körper in drehfester Verbindung steht, verschiebt sich aufgrund der zu überwachenden Drehbewegung die nur einen halben Kreisumfang überspannende Rippe 46 gegen die praktisch einen vollen Kreisumfang überdeckende Rippe 20. Zwischen den aufeinander zuweisenden Stirnflächen dieser beiden Rippen, die die Wandflächen des Spaltes 47 bilden, wird der magnetische Fluß, der hier zwischen dem Kern 3 und dem Joch 4 übertritt, auf einen Raumbereich konzentriert, der, wie der Spalt 47, in etwa die Form eines halben Kreiszylinders besitzt. Die Projektion dieses Raumbereiches auf die Ebene der Meßspulen 8, 9 bildet die Durchtrittsfläche, die hier die Form einer halben Kreisringfläche besitzt und deren Große in etwa gleich der nach unten weisenden Stirnfläche der Rippe 46 ist. Diese Durchtrittsfläche verschiebt sich gegen die beiden Meßspulen 8, 9 wenn sich die beiden zu überwachenden Körper gegeneinander verdrehen.

An den Ausgangsanschlüssen 32, 33 der beiden Meßspulen 8,9 können bezüglich des Ausgangsanschlusses 34 zwei Spannungen abgegriffen werden, deren Differenz in den beiden Stellungen gleich Null ist, in denen das Joch 4 gegen den Kern 3 so gedreht ist, daß die untere Stirnfläche der Rippe 46 zur Hälfte dem Teil der Rippe 20 gegenübersteht, der die Meßspule 8 durchsetzt und zur Hälfte dem Teil der Rippe 20, der sich durch die Meßspule 9 erstreckt. In den beiden anderen Stellungen, in denen die Durchtrittsfläche entweder völlig über der Meßspule 8 oder völlig über der Meßspule 9 liegt, so daß der gesamte über den Spalt 47 übertretende Magnetfluß durch die eine oder die andere dieser beiden Meßspulen geht, während die jeweils andere von keinem magnetischen Fluß durchsetzt wird, besitzt das Differenzsignal ein Minimum bzw. ein Maximum. Dazwischen ergibt sich für alle die Stellungen ein linearer Anstieg bzw. Abfall, in denen ein Teil des im Spalt 47 übertretenden Magnetflusses durch die eine der beiden Meßspulen 8, 9 und ein Teil durch die andere dieser beiden Meßspulen geht.

Bei einer vollen Drehung des Joches 4 gegen den Kern 3 um 360° erhält man also einen dreieckigen Kurvenverlauf, bei dem das Differenzsignal über 180° hinweg linear ansteigt um dann über 180° hinweg wieder linear abzufallen, wobei Minima und Maxima symmetrisch zum Nullpotential der beiden Mittelstellungen liegen.

Die Ausnehmungen 21 in der Rippe 20 können nach dem Aufsetzen der Trägerplatine 7 mit ferromagnetischem Material ausgefüllt werden, so daß die Leiterstücke 34 und 36 nahezu gleichförmig von ferromagnetischem Material umgeben sind. In Verbindung mit der erfindungsgemäßen Maßnahme, die beiden Meßspulen 8, 9 bzw. die von ihnen umschlossenen Flächenelemente 38, 39 so anzuordnen, daß sie dort, wo ihre Berandung von der durch den Spalt 47 definierten Durchtrittsfläche überstrichen wird, einen gemeinsamen, hier vom Anschlußleiter 34 bzw. vom Verbindungsleiter 36 gebildeten Rand aufweisen, erhält man eine äußerst exakte Flußteilung. Das bedeutet, daß jede Feldlinie, die aufgrund einer Relativverschiebung zwischen dem Kern 3 und dem Joch 4 nicht mehr durch die eine der beiden Meßspulen 8, 9 hindurchtritt, notwendigerweise durch die jeweils andere Spule hindurchtreten muß. Senkrecht zur Bewegungsrichtung sind die Flächenelemente 38, 39 deutlich größer als die die Wandflächen des Spaltes 47 bildenden, einander gegenüberliegenden Stirnflächen der Rippen 20, 46, so daß in radialer Richtung auftretende Inhomogenitäten des Magnetfeldes die Meßsignale kaum beeinflussen, da sich alle zu den Meßsignalen beitragenden Feldlinien immer, insbesondere auch dann, wenn Exzentrizitäts- oder Lagerspielbewegungen auftreten, innerhalb der von den Meßspulen 8, 9 umschlossenen Flächenbereiche 38, 39 befinden. Radial noch weiter außen verlaufende Streufeldanteile, für dies nicht mehr gilt, sind so schwach, daß ihnen hinsichtlich der Genauigkeit des Meßergebnisses und des Kennlinienverlaufes keine Bedeutung zukommt.

Dadurch, daß der gesamte von der Erregerspule 6 erzeugte Magnetfluß auf zwei nahezu vollständig geschlossenen Wegen geführt wird, treten sehr wenig Störflüsse auf. Die verbleibenden Störflüsse, die zwischen der halbkreisförmig gebogenen Außenwand des Verbindungsstücks 42 und der Innenseite der Zylinderwand 11 bzw. der Unterseite der halbkreisförmigen Scheibe 41 und der Oberseite des Bodens 12 auftreten, sind weitgehend homogen und wegen der großen geomtrischen Abstände außerordentlich klein.

Verdreht sich das Joch 4 gegen den Kern 3, so wandern diese Streuflüsse zwar mit, ohne dabei aber ihre Einflußmöglichkeiten auf die Meßspulen 8, 9 zu verändern. Magnetflußlinien, die zwischen dem Zapfen 5 und dem Joch 4 über den Spalt 45 hinweg verlaufen, werden entweder bereits in der unteren halbkreisförmigen Scheibe 40 oder nach Durchlaufen des Verbindungsstücks 42 in der oberen halbkreisförmigen Scheibe 41 in radialer Richtung umgelenkt, ohne daß es dabei an den längs der Kreisdurchmesser verlaufenden Rändern dieser beiden Scheiben zu merklichen Feldverformungen kommt. Feldinhomogenitäten, die an den durch die Endflächen 48,49 der Rippe 46 definierten, je nach Bewegungsrichtung vorderen oder hinteren Rändern des Spaltes 47 auftreten, sind somit auf ein Minimum reduziert. Man erhält also eine Drehgeberanordnung, die sehr wenig Streuflüsse nach außen abgibt, umgekehrt aber auch gegen von außen kommende magnetische Störungen unempfindlich ist und dabei ein Ausgangssignal liefert, das in optimaler Weise dem vorgegebenen "Konstruktionskennlinien"-Verlauf folgt.

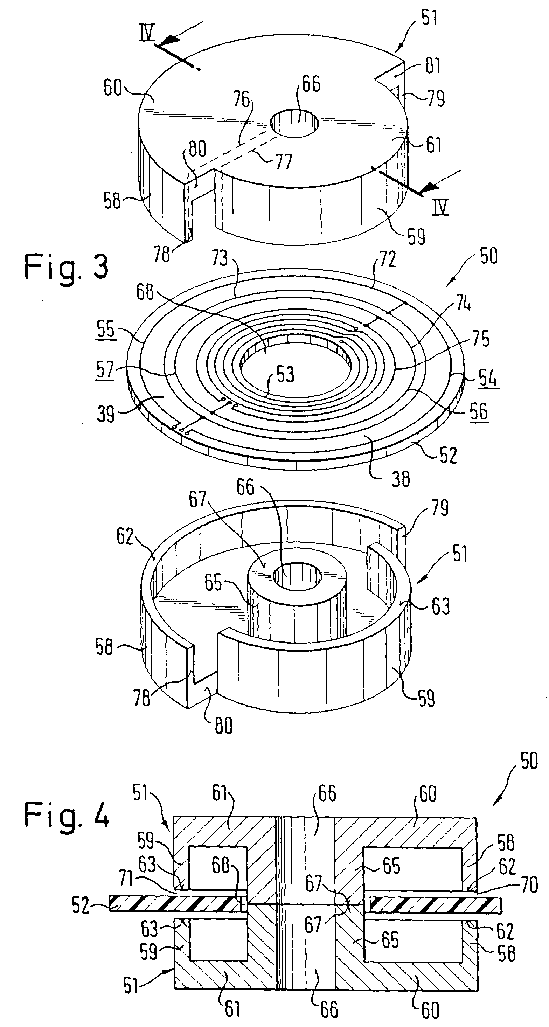

Der in den Fig. 3 und 4 dargestellte Drehgeber 50 besitzt eine Fluß-Führungsvorrichtung, die aus zwei identischen Kernschalen 51, 51 besteht, sowie eine Trägerplatine 52, auf der in Form von gedruckten Schaltungen sowohl die Erregerspule 53 als auch vier Meßspulen 54, 55, 56, 57 angebracht sind.

Jede der beiden Kernschalen 51, 51 besteht aus zwei einstückig miteinander verbundenen hohlen Halbzylindern, die unterschiedliche Radien besitzen und so angeordnet sind, daß ihre Zylinderachsen und ihre längs des jeweiligen Zylinderdurchmessers verlaufenden Ränder zusammenfallen, wobei ihre nach außen gekrümmten Halbzylinderwände 58,59 voneinander weg orientiert sind. An der einen Stirnseite ist jeder der beiden Halbzylinder durch eine Bodenwand 60, 61 abgeschlossen, deren Form genau seinem halbzylindrischen Querschnitt entspricht. Die beiden Bodenwände 60, 61 besitzen die gleiche axiale Dicke und gehen einstückig ineinander über. An der den Bodenwänden 60, 61 gegenüberliegenden Stirnseite besitzen die Halbzylinderwände 58, 59 freie Stirnflächen 62, 63, von denen jede die Form eines halben Kreisringes aufweist. Von den Bodenwänden 60, 61 erstreckt sich in der gleichen Richtung wie die Halbzylinderwände 58, 59 ein zentral angeordneter einstückig verbundener Zapfen 65, dessen axiale Höhe größer als die der Halbzylinderwände 58, 59 ist. In Längsrichtung ist der Zapfen 65 von einer konzentrischen Bohrung 66 durchzogen, die wieder zur Aufnahme einer Welle dienen kann. Im zusammengebauten Zustand sind die beiden Kernschalen 51 so miteinander fest verbunden, daß die freien Stirnflächen 67, 67 der Zapfen 65, 65 aneinander anliegen, wobei die Bohrungen 66, 66 miteinander fluchten und sich die Stirnflächen 62, 62 bzw. 63, 63 der Halbzylinderwände 58, 58 bzw. 59, 59 im Abstand gegenüberliegen, und zwischen sich die Spalte 70, 71 einschließen.

Die Trägerplatine 52 ist als Kreisscheibe mit einer zentralen Öffnung 68 ausgebildet, deren Durchmesser etwas größer als der Außendurchmesser der Zapfen 65, 65 ist. Der Außendurchmesser der Kreisscheibe 52 ist etwas größer als der Durchmesser der beiden größeren Halbzylinderwände 58, 58.

Wie man der Fig. 4 entnimmt, wird die Trägerplatine 52 so angeordnet, daß sich die beiden Zapfen 65, 65 durch ihre zentrale Öffnung 68 hindurch erstrecken und sie parallel zu den Bodenwänden 60, 61 der Kernschalen 51 verläuft, wobei sie sich durch die Spalte 70, 71 erstreckt.

Auf ihrer in Fig. 3 oberen Seite weist die Trägerplatine 52 die spiralförmig ausgebildete Erregerspule 53 auf, die die zentrale Öffnung 68 unmittelbar umgibt. Statt dieser als gedruckter Schaltung ausgebildeten Erregerspule kann auch eine aus Draht gewickelte Flachspule in diesem Bereich angebracht werden.

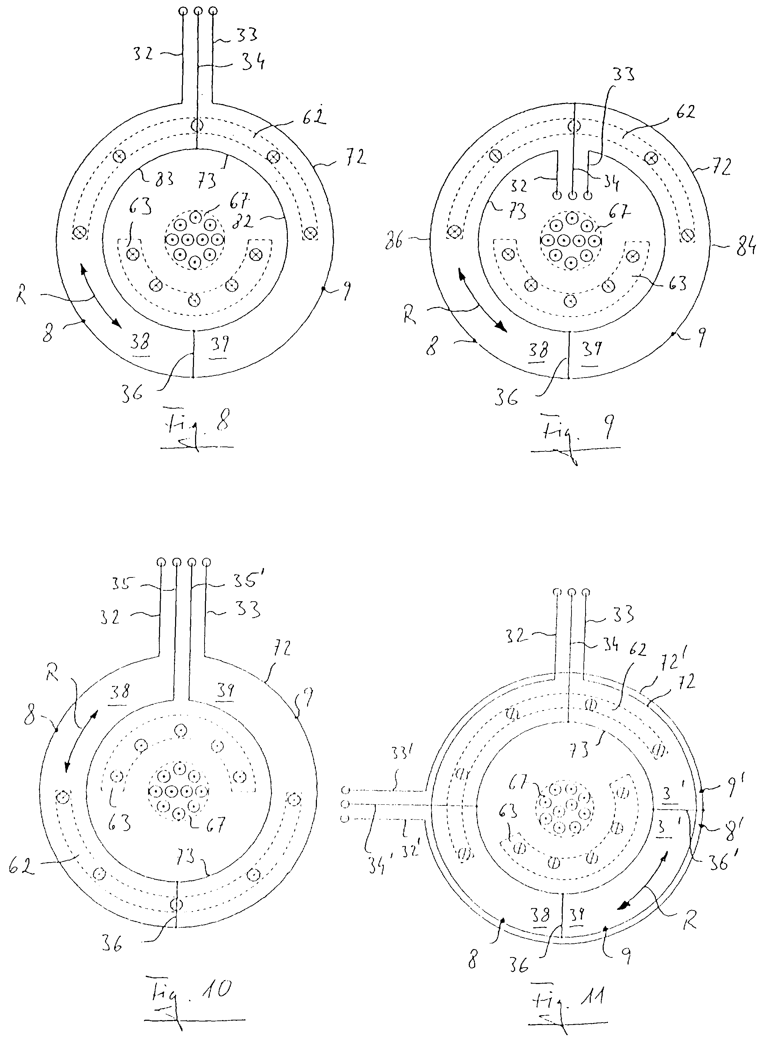

Die vier Meßspulen 54 bis 57 umfassen vier konzentrisch angeordnete kreisförmige Leiter 72 bis 75, von denen jeweils zwei, nämlich die Leiter 72 und 73 einerseits und die Leiter 74 und 75 andererseits eine zwei Meßspulen umfassende Anordnung bilden, wie sie bereits unter Bezugnahme auf Fig. 1 beschrieben wurde. Die einzige Abwandlung der Meßspulen 56, 57, die den kleineren Durchmesser besitzen, besteht darin, daß bei ihnen der äußere Leiter 74 vollständig geschlossen ist, während der innere Leiter die zu den Ausgangsanschlüssen führende Unterbrechung aufweist. Außerdem sind die Ausgangsanschlüsse dieser Meßspulen 56, 57 nicht radial nach außen sondern radial nach innen orientiert. Die funktionsmäßigen Unterschiede solcher geometrisch verschiedener Anordnungen werden weiter unten unter Bezugnahme auf die Fig. 8 bis 11 noch genauer erläutert.

Die Abmessungen der Meßspulen 54, 55 sind so gewählt, daß sie im zusammengebauten Zustand von dem im Spalt 70 zwischen den Stirnflächen 62, 62 übertretenden Magnetfluß durchsetzt werden können, während die Meßspulen 56, 57 den im Spalt 71 zwischen den Stirnflächen 63, 63 übertretenden Magnetfluß erfassen.

Im Betrieb wird die Trägerplatine 52 mit dem einen der beiden nicht dargestellten Körper, deren Drehbewegung messend überwacht werden soll, drehfest verbunden, während die aus den beiden Kernschalen 51, 51 gebildete Fluß-Führungsanordnung mit dem anderen dieser beiden Körper in drehfester Verbindung steht. Dem von der Erregerspule 53 erzeugten Magnetfluß werden auch hier wieder zwei weitgehend symmetrische, im wesentlichen den gleichen magnetischen Widerstand besitzende, ringförmig geschlossene in ihrer Geometrie Stellungsunabhängige Wege angeboten. Der eine dieser beiden Wege erstreckt sich durch die beiden Zapfen 65, 65 über die beiden Bodenflächen 60, 60 mit dem größeren Radius, durch die Zylinderwände 58, 58 und über den zwischen diesen Zylinderwänden eingeschlossenen Spalt 70 hinweg, wobei der ihm folgende Stellungsunabhängig Konstante Magnetfluß die Meßspulen 54, 55 durchsetzen kann. Der andere der beiden Wege verläuft durch die Zapfen 65, 65 über die Bodenflächen 61, 61 mit dem kleineren Radius, über die Zylinderwände 59, 59 und den Spalt 71 hinweg, wo der ihm folgende Stellungsunabhängig Konstante Magnetfluß die Meßspulen 56, 57 durchsetzen kann. Die Erzeugung von Meßsignalen erfolgt dabei in gleicher Weise, wie dies unter Bezugnahme auf die Fig. 1 und 2 bereits beschrieben wurde.

Die von den Meßspulen 56, 57 erzeugten Ausgangssignale können dazu verwendet werden, Meßsignale mit einer größeren Amplitude zu erhalten. Im Falle eines Drehgebers ist dies allerdings nur dann sinnvoll, wenn an die Meßgenauigkeit keine großen Anforderungen gestellt werden.

Im allgemeinen wird man daher auf die Meßspulen 56, 57 völlig verzichten und stattdessen zur Erzielung einer größeren Signalamplitude mit einer stärkeren Erregung arbeiten. Der zweite über den Spalt 71 verlaufende ringförmig geschlossene Weg dient dann wieder ausschließlich als Ausgleichsweg, um durch symmetrische Aufteilung des Gesamtflusses höchste Genauigkeit und Kennlinientreue zu erzielen.

Insbesondere der Fig. 4 läßt sich sehr deutlich entnehmen, daß die Halbzylinderwände 59, 59 mit dem kleineren Radius eine nahezu geschlossene Schirmanordnung bilden, außerhalb derer nur geringe Streufelder auftreten. Dies bedeutet, daß die Teile der Meßspulen 54, 55, die sich aufgrund der momentanen relativen Winkelstellung auf der Seite der Halbzylinderwände 59, 59 mit dem kleineren Radius und damit außerhalb der Fluß-Führungsvorrichtung befinden, nur sehr kleinen von der Erregerspule 53 kommenden Streuflüssen ausgesetzt sind.

In die in Fig. 3 obere Kernschale sind symbolisch zwei radial verlaufende und dann nach unten umknickende Magnetflußlinien 76, 77 eingezeichnet, die im radialen Bereich unmittelbar nebeneinander so verlaufen, daß die eine, nämlich die Flußlinie 77 sich in ihrem vertikalen Teil gerade noch durch die Halbzylinderwand 59 mit dem kleineren Radius erstreckt, während die Flußlinie 76 bereits durch die Halbzylinderwand 58 mit dem größeren Radius verläuft. Man sieht, daß die beiden Flußlinien diesen unterschiedlichen Wege völlig ungestört folgen können. Mit anderen Worten: An den je nach Drehrichtung vorauseilenden oder nachlaufenden Spalträndern 78, 79 kommt es anders als beim Stand der Technik kaum zu Feldverzerrungen, da an den seitlichen freien Endflächen 80, 81 der Fluß-Führungsvorrichtung nahezu keine Streuflußlinien entlanglaufen.

Der Vorteil dieser Variante gegenüber der Ausführungsform nach den Fig. 1 und 2 liegt in der hohen Symmetrie und der Tatsache, daß der die Erregerspule durchsetzende, von den beiden Zapfen gebildete Teil der Fluß-Führungsvorrichtung keinen Luftspalt besitzt. Durch letzteres werden Fremdfelder wegen des geringen magnetischen Widerstandes stets durch die Zapfen 65, 65 geleitet und somit von der Meßspulenanordnung ferngehalten.

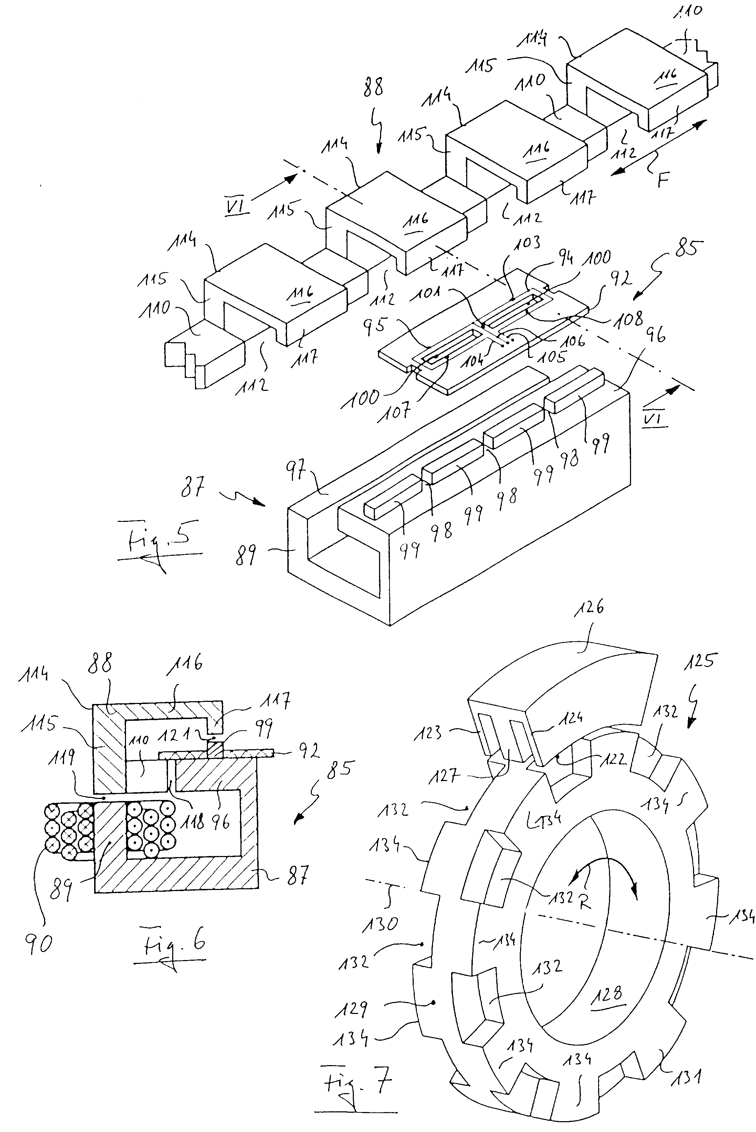

Bei dem in den Fig. 5 und 6 dargestellten Ausführungsbeispiel handelt es sich um einen Lineargeber 85, der analog zum Drehgeber der Fig. 1 und 2 aufgebaut ist. Er umfaßt eine Fluß-Führungsvorrichtung aus ferromagnetischem Material, die aus einem Kern 87 und einem Joch 88 besteht, sowie eine um einen Schenkel 89 des Kerns gewickelte Erregerspule 90 (in Fig. 5 weggelassen) und eine auf der einen Seite einer Trägerplatine 92 in Form einer gedruckten Schaltung ausgebildete Meßspulenanordnung, mit zwei Meßspulen 94, 95.

Der Kern 87 besitzt die Form eines länglichen, rechteckigen, hohlen Quaders, dessen in den Fig. 5 und 6 obere Wand 96 in etwa zur Hälfte weggeschnitten ist, so daß die in den Figuren linke Seitenwand des Hohlquaders als freier Schenkel 89 nach oben ragt. Die obere freie Stirnfläche 97 des Schenkels 89 liegt dabei etwas tiefer als die Innenfläche des stehengebliebenen Teils der oberen Wand 96.

Auf ihrer Außenseite besitzt die obere Wand 96 eine in den Figuren nach oben vorspringende Rippe, die sich parallel zur Längsachse des Kerns 87 nahezu über dessen gesamte Länge erstreckt und einen in etwa quadratischen Querschnitt aufweist. Diese Rippe wird von drei quer verlaufenden Ausnehmungen 98 unterbrochen, die bis zur Oberfläche der Wand 96 reichen und so die Rippe in vier in etwa gleichlange Teilrippen 99 unterteilen.

Die rechteckige Trägerplatine 92 besitzt zwei durchgehende, langgestreckte, rechteckige Öffnungen 100, die in Längsrichtung miteinander fluchten und durch einen Steg 101 voneinander getrennt sind. Anordnung und Dimensionierung dieser Öffnungen 100 ist so getroffen, daß die Trägerplatine 92 auf die Oberseite des Kerns 87 so aufgesetzt werden kann, daß sich die beiden mittleren Teilrippen 99, 99 durch die beiden Öffnungen 100, 100 hindurcherstrecken, während der Steg 101 durch die mittlere der drei Ausnehmungen 98 verläuft.

Die beiden Meßspulen weisen einen rechteckigen, langgestreckten Leiter 103 auf, der die beiden Öffnungen 100 parallel zu deren Rändern nahezu vollständig umgibt. Lediglich auf der einen Seite ist der Leiter 103 im Bereich des Steges 101 unterbrochen und seine beiden freien Enden sind mit Ausgangsanschlüssen 104, 105 verbunden, die sich zueinander parallel und senkrecht zur Längsrichtung des Leiters 103 nach außen erstrecken. Von der gegenüberliegenden Seite des Leiters 103 erstreckt sich ein Anschlußleiter 106 über den Steg 101 zwischen die Ausgangsanschlüsse 104, 105 und parallel zu diesen. Dieser Anschlußleiter 106 bildet den gemeinsamen Rand der von den beiden Meßspulen 94, 95 umschlossenen Flächenbereiche 107, 108.

Das Joch 88 ist bei diesem Ausführungsbeispiel als Stab ausgebildet, der eine langgestreckte flache Platte 110 umfaßt, in die in regelmäßigen Abständen Ausnehmungen 112 eingearbeitet sind, in deren Bereich jeweils eine in den Fig. 5 und 6 nach oben ragende Zinne 114 über die flache Platte 110 übersteht.

Die Dicke der flachen Platte 110 ist gleich der des stehengebliebenen Teils der oberen Wand 96 des Kerns 87, und ihre Breite quer zur Längsrichtung ist etwas kleiner als die Breite des weggeschnittenen Teils der oberen Wand 96. Die rechteckigen Ausnehmungen 112 erstrecken sich von der einen Längskante der flachen Platte 110 in diese hinein und besitzen eine solche Tiefe, daß der verbleibende Teil der flachen Platte die gleiche Dicke wie der freie Schenkel 89 des Kerns 87 aufweist. Die Länge der Ausnehmungen 112 ist gleich der Länge einer jeden der vier Teilrippen 99. Die zwischen den Ausnehmungen 112 stehengebliebenen Teile der flachen Platte 110 besitzen ebenfalls diese Länge.

Die über die flache Platte 110 in den Fig. 5 und 6 nach oben vorstehenden Zinnen 114 besitzen einen in etwa L-förmigen Querschnitt mit einem vertikal nach oben ragenden Schenkel 115, der so angeordnet ist, daß seine in den Figuren linke Seitenfläche mit der entsprechenden Seitenfläche der flachen Platte 110 fluchtet. An seinem in den Figuren oberen Ende geht der vertikale Schenkel 115 in einen horizontalen Schenkel 116 über, der in die gleiche Richtung weist, wie die zwischen den Ausnehmungen 112 stehengebliebenen Teile der flachen Platte 110, zu denen er sich in etwa parallel erstreckt. An seinem in den Figuren rechten Rand besitzt jeder der horizontalen Schenkel 116 eine nach unten weisende Rippe 117, die sich über die gesamte Länge der Zinne 114 erstreckt und damit ebenso lang ist, wie jede der vier Teilrippen 99 des Kerns 87.

Im zusammengebauten Zustand wird das Joch 88 so angeordnet, daß die flache Platte 110 in etwa den Platz des weggeschnittenen Teils der oberen Wand 96 des Kerns 87 einnimmt, wobei die horizontalen Schenkel 116 zum verbliebenen Teil dieser oberen Wand 96 hin gerichtet sind. Das Joch 88 ist mit der in den Figuren rechten Seite seiner flachen Platte 110 vom stehengebliebenen Teil der Wand 96 durch Spalte 118 sowie von der Stirnfläche 97 des Schenkels 89 des Kerns 87 durch einen Spalt 119 getrennt. Die Spalte 118 und der Spalt 119 sind auch hier in Wirklichkeit wesentlich kleiner, als dies in Fig. 6 der Deutlichkeit halber wiedergegeben ist.

Im Bereich der Ausnehmungen 112 ist dagegen der Abstand zwischen dem Joch 88 und dem stehengebliebenen Teil der oberen Wand 96 im Vergleich zu den Spalten 118 sehr groß, so daß aufgrund des entsprechend größeren magnetischen Widerstandes hier nur ein äußerst geringer Streufluß übertritt.

Die Weite, mit der die horizontalen Schenkel 116 der Zinnen 114 von den vertikalen Schenkeln 115 abstehen, ist so bemessen, daß die im zusammengebauten Zustand auf den Kern 87 zuweisende freie Stirnfläche der Rippen 117 mit geringem Abstand den in den Fig. 5 und 6 oberen Stirnflächen der Teile der Rippe 99 gegenüberliegen. Die hier gebildeten Spalte 121 sind ebenfalls kleiner als in Fig. 6 wiedergegeben.

Durch die beschriebene Ausgestaltung werden auch hier dem von der Erregerspule 90 erzeugten Magnetfluß zwei verschiedene Arten von ringförmig geschlossenen Wegen angeboten, wobei jeweils mehrere Wege ein und derselben Art vorhanden sind.

Die erste Art von Wegen führt vom Schenkel 89 über den Spalt 119 in den nach oben gerichteten Schenkel 115, über den vertikalen Schenkel 116, die nach unten weisende Rippe 117, über den Spalt 121 hinweg in eine oder zwei Teilrippen 99, den stehengebliebenen Teil der oberen Wand 96, sowie über die in den Figuren rechte Seitenwand und den Boden des den Kern 87 bildenden Hohlquaders zurück zum Schenkel 89. Der durch diesen Meßweg verlaufende stellungsunabhängig Konstante Magnetfluß durchsetzt also die im Bereich der Spalte 121 angeordneten Meßspulen 94, 95 in stellungsabhängiger Weise und erzeugt so die an den Ausgängen der beiden Meßspule abgreifbaren Meßsignale, deren Differenz für die momentane Stellung des Joches 88 bezüglich des Kerns 87 repräsentativ ist und ebenfalls einen linear ansteigenden und abfallenden Dreiecksverlauf besitzt.

Die zweite Art von ringförmig geschlossenen Wegen verläuft vom Schenkel 89 über den Spalt 119 in die flache Platte 110 und über die Spalte 118 unmittelbar in den stehengebliebenen Teil der oberen Wand 96, von wo er sich in gleicher Weise zurück zum Schenkel 89 erstreckt, wie dies oben für die erste Art von Wegen beschrieben wurde. Der in diesen Ausgleichswegen verlaufende stellungsunabhängig Konstante Magnetfluß bleibt also immer unterhalb der Ebene der Meßspulen 94, 95 und kann das Meßsignal in keiner Weise beeinflussen oder verfälschen. Er halbiert symmetrisch den Gesamtfluß um weitere Störgrößen auszuschalten.

Verschiebt sich das Joch 88 in Richtung des Doppelpfeiles F gegen den Kern 87, so verschieben sich auch die durch die unteren Stirnseiten der Rippen 117 definierten Durchtrittsflächen über die von den Meßspulen 94, 95 umschlossenen Flächenelemente 107, 108, so daß sich der die Meßspulen durchsetzende magnetische Fluß verändert.

Die beiden äußeren Teilrippen 99 dienen dazu, an den in Längsrichtung vorderen bzw. hinteren Enden der beiden Meßspulen 94, 95 symmetrische und definierte Verhältnisse zu schaffen. Die an diesen Enden verlaufenden Leiterabschnitte der Meßspulen 94, 95, die sich ebenso wie der Anschlußleiter 106 durch die Ausnehmungen 99 erstrecken, können ebenso wie dieser vollständig oder weitgehend in ferromagnetisches Material eingebettet werden, wie dies oben bereits beschrieben wurde.

Das in Fig. 7 wiedergegebene Ausführungsbeispiel eines Drehgebers 125 ist für die genaue messende Erfassung eines vergleichsweise kleinen Winkelbereichs, beispielsweise 45° geeignet, der bei einer vollen 360°-Drehung wiederholte Male (hier achtmal) durchlaufen wird. Zu diesem Zweck weist der Drehgeber 125 einen im Querschnitt E-förmigen Kern 126 auf, um dessen mittleren Schenkel 127 die in Fig. 7 nicht dargestellte Erregerspule gewickelt ist. An der Stirnfläche 122 eines der beiden äußeren E-Schenkel 123, 124 ist eine in Fig. 7 ebenfalls nicht wiedergegebene Meßspulenanordnung vorgesehen, die weitgehend der in Fig. 5 gezeigten Meßspulenanordnung entspricht, d.h. also ebenfalls zwei von in etwa rechteckigen Leitern gebildete, in Längsrichtung des Kerns 126 hintereinander angeordnete Meßspulen umfaßt, die ebenfalls von an der Stirnseite des betreffenden E-Schenkels 123 oder 124 des Kerns 126 vorgesehenen Rippenteilen durchsetzt werden können. Der Hauptunterschied zur Meßspulenanordnung aus Fig. 5 besteht hier darin, daß die Trägerplatine nicht eben sondern ebenso wie die Stirnseiten der E-Schenkel 123, 124, 127 des Kerns 126 in Längsrichtung kreisbogenförmig gekrümmt ist.

Als Joch 128 ist hier ein Rad vorgesehen, das um eine strichpunktierte Achse 130 in Richtung des Doppelpfeils R drehbar gelagert ist. Der Kern 126 ist mit einem geringen Abstand zur Umfangsfläche 129 des Jochs 128 so angeordnet, daß sich seine Längsrichtung in Umfangsrichtung erstreckt, d.h. sein E-förmiger Querschnitt in Richtung der Achse 130 verläuft. Die Länge des Kerns 126 in Umfangsrichtung und die Krümmung der dem Joch 128 zugewandten Stirnflächen der E-Schenkel 123, 124, 127 sind so gewählt, daß der Kern 126 etwa den Winkelbereich von 45° überdeckt, der hier messend aufgelöst werden soll. In das Joch 128 sind von beiden Stirnseiten 131 her Ausnehmungen 132 eingearbeitet, die sich ausgehend von der Umfangsfläche 129 alternierend in die beiden Stirnflächen 131 hineinerstrecken. Auf der gleichen Seite liegende, einander benachbarte Ausnehmungen 132 werden jeweils durch einen stehengebliebenen zinnenförmigen Teil 134 voneinander getrennt. In Umfangsrichtung besitzen die Ausnehmungen 132 und die zinnenförmigen Teile 134 die gleiche Länge, die so gewählt ist, daß eine Ausnehmung 132 und ein zinnenförmiger Teil 134 den zu überwachenden Winkel, hier 45° überdecken.

Die Ausnehmungen 132 der einen Stirnfläche 131 sind gegen die Ausnehmungen 132 der anderen Stirnfläche 131 so versetzt angeordnet, daß sich in axialer Richtung gesehen immer eine Ausnehmung 132 und ein zinnenförmiger Teil 134 gegenüberliegen. Die Tiefe der Ausnehmungen 132 in axialer Richtung ist etwa doppelt so groß wie die Querschnittsbreite der beiden äußeren E-Schenkel 123, 124 des Kerns 126. Die axiale Breite des Jochs 128 ist so gewählt, daß zwischen den von beiden Seiten her eingearbeiteten Ausnehmungen 132 ein durchgehender Steg stehenbleibt, der in etwa die gleiche Breite besitzt wie der mittlere E-Schenkel 127 des Kerns 126, der in etwa die vierfache Breite aufweist, wie die beiden äußeren E-Schenkel 123, 124.

Auch bei dieser Ausführungsform werden dem von der Erregerspule erzeugten magnetischen Fluß zwei ringförmig geschlossene Wege angeboten, von denen der eine vom mittleren E-Schenkel 127 über den E-Quersteg in den einen äußeren E-Schenkel 124, von diesem über dem zwischen den Kern 126 und dem radförmigen Joch 128 vorhandenen Luftspalt in die dem Kern 126 gegenüberliegenden Stirnflächen von wenigstens einem und im Regelfall zwei zinnenförmigen Teilen 134 und von diesen über den mittleren Bereich der Umfangsfläche 129 zurück in den mittleren E-Schenkel 127 verläuft. Der andere Weg erstreckt sich in der gleichen Weise durch den anderen äußeren E-Schenkel 123. Jeder der Teile des Gesamtmagnetflusses, die durch diese ringförmig geschlossenen Wege geführt werden ist unabhängig von der momentanen Stellung des radförmigen Joches 128 bezüglich des Kerns 126 Konstant. Auch hier ist es prinzipiell möglich in dem Spalt zwischen der Stirnfläche der beiden äußeren E-Schenkel jeweils eine eigene Meßspulenanordnung vorzusehen, von denen jede zwei Flächenelemente umfaßt, so daß insgesamt zwei Differenzsignale gebildet und zur Verstärkung der Ausgangssignal-Amplitude miteinander kombiniert werden können. Es ist aber erfindungsgemäß völlig ausreichend, nur in einem der beiden beschriebenen Wege eine Meßspulenanordnung vorzusehen und den anderen Weg als reinen Ausgleichsweg zu verwenden.

Bildet man die Meßspulen auch hier so aus, wie dies oben unter Bezugnahme auf die Fig. 5 und 6 beschrieben wurde, so ergibt sich wieder eine linear ansteigende und linear abfallende Dreiecks-Kennlinie, die einmal voll durchlaufen wird, wenn sich das Joch 128 um 45° dreht.

In den Fig. 8 bis 10 sind Meßspulenanordnungen wiedergegeben, die für Drehgeber geeignet sind, bei denen ein Drehwinkel von nahezu 180° messend erfaßt und aufgelöst werden soll. Die Meßspulenanordnung der Fig. 11 erlaubt dagegen eine Messung von Winkeln bis zu 360° und mehr.

Die Meßspulenanordnungen der Fig. 8 bis 10 umfassen jeweils zwei Meßspulen 8, 9, von denen jede aus einer einzigen Windung besteht, die so ausgebildet ist, daß das von der betreffenden Meßspule umschlossene Flächenelement 38 bzw. 39 in etwa die Form eines halben Kreisringes besitzt. Die beiden halben Kreisringe sind so angeordnet, daß sie sich gegenseitig zu einem geschlossenen Kreisring ergänzen.

Weiterhin sind in den Fig. 8 bis 10 symbolisch durch gestrichelte Linien die Flächenbereiche wiedergegeben, durch die der weitgehend homogene Magnetfluß hindurchtritt, wenn die betreffenden Meßspulenanordnungen in Verbindung mit einer Fluß-Führungsvorrichtung Verwendung finden, wie sie im Zusammenhang mit den Fig. 3 und 4 beschrieben wurde. Es sind dies die Stirnfläche 67 des Zapfens 65 sowie die Stirnflächen 63 der halbzylindrischen Wand 59 (siehe Fig. 3) und die Stirnfläche 62 der halbzylindrischen Wand 58.

Die durch diese Stirnflächen 62, 63 und 67 hindurchtretenden Magnetflußlinien sind in symbolischer Weise dargestellt, wobei in den Fig. 8 bis 10 ein Zeitpunkt wiedergegeben ist, in dem der magnetische Fluß durch die Stirnfläche 67 auf den Betrachter zu und durch die Stirnflächen 62, 63 vom Betrachter weg verläuft, wobei, wie dies im Zusammenhang mit den Fig. 3 und 4 beschrieben wurde, die jeweilige Umlenkung mit Hilfe der halbkreisförmigen Bodenwände 61, 62 der Kernschalen 51 erfolgt.

Die von diesen Kernschalen 51, 51 gebildete Fluß-Führungsvorrichtung ist gegen die in den Fig. 8 bis 10 dargestellten Meßspulenanordnungen jeweils in Richtung des Doppelpfeils R, d.h. in Umfangsrichtung verdrehbar. Dabei verschieben sich die Stirnflächen 62, 63 in dieser Umfangsrichtung, während die Stirnfläche 67 ortsfest bleibt.

Man sieht, daß die Abmessungen der von den Meßspulen 8, 9 umschlossenen Flächenelemente 38, 39 senkrecht zur Bewegungsrichtung, d.h. in den Fig. 8 bis 10 in radialer Richtung wesentlich größer als die entsprechenden Abmessungen der Stirnflächen 62 sind. Letztere sind so positioniert, daß sie in radialer Richtung in etwa in der Mitte der Flächenelemente 38, 39 liegen und so zu den diesen Flächenelemente begrenzenden äußeren bzw. inneren Leitern 72, 73 einen so großen Abstand haben, daß nahezu alle Feldinhomogenitäten, die an den äußeren und inneren Umfangsrändern der durch die Stirnflächen 62 definierten Durchtrittsflächen auftreten, immer innerhalb der Flächenelemente 38, 39 liegen. Geringe Exzentrizitätsbewegungen, gen, wie sie bei "normaler" Lagerung auftreten können, haben somit wenig Einfluß auf das Meßergebnis.

In Bewegungsrichtung, d.h. in Richtung des Umfangs haben die Stirnflächen 62 praktisch die gleiche Länge wie die Flächenelemente 38, 39, d.h. sie bilden jeweils einen halben Kreisring.

Die Größe und Form der Stirnflächen 62 einerseits und der beiden Flächenelemente 38, 39, sowie die gegenseitige Lage der letzteren sind so aufeinander abgestimmt, daß bei der zu überwachenden Drehbewegung in Richtung des jeweiligen Doppelpfeiles R die Stirnfläche 62 sich gegen die Flächenelemente 38, 39 so verschiebt, daß der Magnetfluß durch das eine der beiden Flächenelemente 38, 39 genau in dem Maße zunimmt, wie der Magnetfluß durch das jeweils andere Flächenelement abnimmt und umgekehrt. Damit werden in den Meßspulen 8, 9 zwei Spannungen induziert, deren Differenz die Stellung des einen der beiden zu überwachenden Körper bezüglich des anderen wiedergibt.

Wesentlich ist dabei, daß die beiden einander benachbarten Flächenelemente 38, 39 wenigstens ein gemeinsames Randstück aufweisen, über das sich die durch die Stirnfläche 62 definierte Durchtrittsfläche aufgrund der zu überwachenden Bewegung hinweg verschieben kann. Bei den in den Fig. 8 bis 10 dargestellten Anordnungen ist dies das Randstück, das vom Verbindungsleiter 36 gebildet wird, der sich in radialer Richtung zwischen dem inneren Leiter 73 und dem äußeren Leiter 72 erstreckt. Ein zweites derartiges Randstück wird bei den Ausführungsformen der Fig. 8 und 9 zusammen durch den jeweiligen Anschlußleiter 34 definiert, der dem Verbindungsleiter 36 diametral gegenüberliegt und ebenfalls in radialer Richtung verläuft.

Bei beiden in den Fig. 8 und 9 wiedergegebenen Ausführungsbeispielen sind jeweils zwei Leiterabschnitte 82, 83, bzw. 84, 86 von denen der eine das Flächenelement 38 und der andere das Flächenelement 39 jeweils längs eines Randes, der in etwa parallel zur Verschiebungsrichtung der Stirnfäche 62 gegen das betreffende Flächenelement 8 bis 9 verläuft, d.h. hier längs des inneren (Fig. 8) bzw. äußeren (Fig. 9) Kreisumfanges begrenzt, an ihren beiden Enden so miteinander verbunden, daß sie einen ringförmig geschlossenen Leiter 82, 83 bzw. 84, 86 bilden. Diese ringförmig geschlossenen Leiter können z.B. entweder aus einem Material hergestellt werden, das eine etwas geringere Leitfähigkeit als die normalerweise verwendeten Kupferleiter besitzt, oder sie können so dünn gestaltet werden, daß ihr Widerstand genügend hoch ist, um die Signalquelle, welche die nicht dargestellte Erregerspule speist, nicht zu sehr zu belasten, und den in diesem geschlossenen Leiter 82, 83 bzw. 84, 86 fließenden Strom auf ein unschädliches Maß zu begrenzen.

Über den bereits erwähnten, radial verlaufenden Anschlußleiter 34 ist der geschlossene Leiter 82, 83 (Fig. 8) bzw. 84, 86 (Fig. 9) mit den zur Auswerteelektronik führenden Ausgangsanschlüssen verbunden.

Der jeweils andere, die beiden Flächenelemente 8, 9 am äußeren Kreisumfang (Fig. 8) bzw. am inneren Kreisumfang (Fig. 9) begrenzende Leiter 72 bzw. 73 ist an der dem Verbindungsleiter 36 diametral gegenüberliegenden Stelle unterbrochen und die dadurch entstehenden freien Enden sind über Anschlußleiter 32, 33, die in geringem Abstand parallel zum Anschlußleiter 34 radial nach außen (Fig. 8) bzw. radial nach innen (Fig. 9) verlaufen, mit den entsprechenden Ausgangsanschlüssen verbunden. Jede der Meßspulenanordnungen der Fig. 8 und 9 besitzt also drei Ausgangsanschlüsse, zwischen denen zwei Meßsignale abgegriffen werden können, wobei der mit dem mittleren Anschlußleiter 34 verbundene Ausgangsanschluß als gemeinsamer Bezugspunkt dient. Diese Signale werden gleichgerichtet und ihre Differenz dient als Maß für die momentane Stellung, die die durch die Stirnfläche 62 definierte Durchtrittsfläche bezüglich der beiden Flächenelemente 38, 39 einnimmt.

Aufgrund der unterschiedlichen Ausbildung der Meßspulenanordnung der Fig. 8 und 9 besitzen diese Differenzsignale geringfügig unterschiedliche Eigenschaften: Wie man der Fig. 8 entnimmt, umschließt der innere, geschlossene Leiter 82, 84 den gesamten, innerhalb der Stirnfläche 67 durch die Zeichenebene von unten nach oben hindurchtretenden Magnetfluß, während er von dem durch die Zeichenebene in umgekehrter Richtung hindurchtretenden Magnetfluß nur den Teil umschließt, der innerhalb der Stirnfläche 63 verläuft. Als Folge hiervon wird zu den beiden, zwischen den mit den Anschlußleitern 32, 34 bzw. 33, 34 verbundenen Ausgangsanschlüssen abgreifbaren Spannungen jeweils eine Zusatzspannung addiert. Diese beiden Zusatzspannungen sind zwar stellungsabhängig aber immer gleich groß. Solange man als für die momentane Stellung repräsentatives Signal so, wie oben erwähnt, nur die Differenz dieser beiden Ausgangssignale verwendet, fallen diese beiden Zusatzspannungen heraus. In manchen Fällen ist es aber erforderlich, nicht allein die Differenz der beiden Ausgangssignale sondern den Quotienten aus Differenz und Summe dieser beiden Ausgangssignale als für die momentane Stellung repräsentatives Signal zu verwenden, um mögliche Änderungen der Erregung zu eliminieren. Aus der Summe der beiden Ausgangssignale heben sich aber die Zusatzspannungen nicht mehr heraus. Ihr wesentlichster Effekt ist eine Nullpunktsverschiebung des Ausgangssignals.Darüber hinaus sind die additiven Zusatzspannungen aber auch temperaturabhängig.

Um diesen Störeffekt möglichst klein zu halten, ist daher die Anordnung nach Fig. 9 vorzuziehen, bei der der geschlossene Leiter 84, 86 alle senkrecht zur Zeichenebene von unten nach oben verlaufenden und alle senkrecht zur Zeichenebene von oben nach unten verlaufenden Magnetflußlinien umschließt, so daß der resultierende umschlossene Magnetfluß nahezu gleich Null ist. Zwar wird auch hier wegen der unterschiedlichen radialen Abstände, die die Stirnfläche 62 einerseits und die Stirnfläche 63 andererseits von dem ringförmig geschlossenen Leiter 72 besitzen, in letzterem nach dem Biot-Savart'schen Gesetz eine Spannung induziert, die sich auf die beiden Ausgangssignale additiv aufprägt. Diese Zusatzspannungen sind bei dem Ausführungsbeispiel der Fig. 9 aber erheblich kleiner als beim Ausführungsbeispiel nach Fig. 8, so daß ihre Temperturabhängigkeit das Meßergebnis wesentlich weniger beeinflußt. Man wird daher die Ausführungsform nach Fig. 9 überall dort vorziehen, wo es möglich ist, die Auswerteelektronik innerhalb des inneren Leiters 73 der Meßspulenanordnung unterzubringen. Mit den innenliegenden Ausgangsanschlüssen verbundene, nach außen führende Drähte müssen ansonsten sorgfältig miteinander verdrillt werden, damit sie keine Flächenbereiche umschließen, durch die Magnetflußlinien hindurchtreten können.

Um auch den Anschlußleiter 34 im Sinne der Erfindung zu einem idealen Randleiter zu machen, der die beiden Flächenelemente 38, 39 so voneinander trennt, daß er zu beiden Flächenelementen gehört, kann er anders als in den Fig. 8 und 9 dargestellt, auf der Seite der Anschlüsse, d.h. in Fig. 8 radial außerhalb und in Fig. 9 radial innerhalb des von der Durchtrittsfläche überstrichenen Bereichs so verbreitert werden, daß er den gesamten Zwischenraum zwischen den Anschlußleitern 32, 33 überdeckt. Realisiert man die Meßspulenanordnungen der Fig. 8 und 9 als gedruckte Schaltungen, so ist hierzu zwar ein Ebenenwechsel auf der gedruckten Schaltungsplatine erforderlich, für den jedoch ausreichend Platz zur Verfügung steht.

Unter den eben genannten Voraussetzungen sind diese beiden Ausführungsformen geeignet, Drehbewegungen messend zu verfolgen, die einen Winkel von kleiner 180° überstreichen können. Besonders vorteilhaft ist hier, daß es von jedem der beiden äußeren Anschlußleiter 32 bzw. 33 einen durchgehenden Leiterpfad zum mittleren Anschlußleiter 34 in der Weise gibt, daß jedes der an diesen Anschlußleitern abgreifbaren elektrischen Signale durch Integration über die Magnetflüsse erzeugt wird, die durch die von diesem Leiterpfad umschlossene Fläche hindurchtreten.

Diese Leiterpfade verlaufen in Fig. 8 für die Meßspule 8 vom Anschlußleiter 32 über den linken Halbkeisbogen des äußeren Leiters 72, den Verbindungsleiter 36 und den rechten Halbkreisbogen 82 des inneren Leiters 73 zum Anschlußleiter 34 und für die Meßspule 9 vom Anschlußleiter 33 über den rechten Halbkreisbogen des äußeren Leiters 72, den Verbindungsleiter 36 und den linken Halbkreisbogen 83 des inneren Leiters 73 zum Anschlußleiter 34. Beide Pfade umschließen den größten Teil des in der Anordnung auftretenden Magnetflusses (nämlich immer die gesamten Flüsse durch die Stirnflächen 63 und 67 sowie wechselnde Anteile des Flusses durch die Stirnfläche 62) und damit im wesentlichen auch alle relevanten Störflüsse. Da zur Gewinnung des Meßsignals die Differenz der zwischen den Anschlüssen 32, 34 und 33, 34 abgreifbaren Spannungen gebildet wird, fallen diese Störeinflüsse wieder heraus. Ein wesentlicher Gesichtspunkt ist hier also, in jedes der beiden Teilsignale möglichst alle Störungen in gleicher Weise eingehen zu lassen, damit sich bei der nachfolgenden Subtraktion eine weitestgehende Eliminierung ergibt.

Entsprechendes gilt auch für die Ausführungsform nach Fig. 9, bei der die Integrationspfade für die Meßspule 9 vom Anschlußleiter 32 über den linken Halbkreisbogen des inneren Leiters 73, den Verbindungsleiter 36 und den rechten Halbkreisbogen 84 des äußeren Leiters 72 zum Anschlußleiter 34 und für die Meßspule 8 vom Anschlußleiter 33 über den rechten Halbkreisbogen des inneren Leiters 73, den Verbindungsleiter 36 und den linken Halbkreisbogen 86 des äußeren Leiters 72 zum Anschlußleiter 34 verlaufen.

Bei dem Ausführungsbeispiel der Fig. 10 ist dies dann, wenn es genau in der gezeichneten Weise realisiert wird, nicht möglich. Dieses Beispiel unterscheidet sich nämlich von den eben beschriebenen Ausführungsformen darin, daß beide Leiter 72, 73 an der dem Verbindungsleiter 36 gegenüberliegenden Seite eine Unterbrechung aufweisen, so daß hier vier Ausgangsleiter 32, 33, 35, 35' vorhanden sind, die zu vier Ausgangsanschlüssen führen. Der Vorteil dieser Anordnung besteht darin, daß zwischen diesen Ausgangsanschlüssen, die allerdings nicht miteinander kurzgeschlossen werden dürfen, zwei Signale abgegriffen werden können, auf die keine temperaturabhängigen Zusatzspannungen aufgeprägt sind. Will man diese Ausführungsform so abwandeln, daß auch sie für eine Winkelmessung größer 360° geeignet ist, so können beispielsweise die beiden Anschlußleiter 35, 35' in zwei verschiedenen Ebenen so geführt werden, daß sie in den Bereichen, in denen sie einem die Zeichenebene senkrecht durchsetzenden Magnetfluß ausgesetzt sind, in Richtung dieses Magnetflusses gesehen hintereinanderliegen und miteinander zur Deckung kommen. Bei einer gedruckten Schaltung kann dies wieder durch eine Verwendung der beiden Platinenseiten geschehen. Außerhalb des von einem Magnetfluß durchsetzten Bereiches können die beiden Anschlußleiter 35, 35' dann so auseinandergeführt werden, daß ihre Anschlußkontakte bequem nebeneinander Platz finden.

Eine weitere Möglichkeit, die eben beschriebenen Schwierigkeiten mit den additiven Zusatzspannungen zu vermeiden, besteht darin, wie in Fig. 11 gezeigt, zwei Meßspulensysteme gemäß Fig. 8 zu verwenden und diese um 90° gegeneinander verdreht anzuordnen. Diese beiden Meßspulensysteme haben den inneren, ringförmig geschlossenen Leiter 73 gemeinsam. Er ist über zwei Verbindungsleiter 36, 36', die um einen Winkel von 90° gegeneinander versetzt angeordnet sind, mit den beiden äußeren Leitern 72, 72' verbunden, die in Wirklichkeit den gleichen Durchmesser besitzen und beispielsweise auf den beiden Flachseiten einer doppelseitigen Trägerplatine für gedruckte Schaltungen angeordnet sein können. Die hierfür erforderlichen Durchkontaktierungen zwischen den beiden Platinenseiten sind in Fig. 11 der Einfachheit halber nicht wiedergegeben. Es ist aber davon auszugehen, daß alle einander überkreuzenden Leiter an der betreffenden Stelle voneinander isoliert sind, soweit ein elektrisch leitender Kontakt nicht durch eine punktförmige Verdickung kenntlich gemacht ist. Jeder der beiden äußeren Leiter 72, 72' ist an der dem zugehörigen Anschlußleiter 36, 36' diametral gegenüberliegenden Seite unterbrochen und dort so, wie dies oben unter Bezugnahme auf die Fig. 8 beschrieben wurde, mit zwei im Abstand nach außen verlaufenden Anschlußleitern 32, 33 bzw. 32', 33' verbunden, zwischen denen sich ein von dem inneren, vollständig geschlossenen Leiter 73 kommender Anschlußleiter 34 bzw. 34' radial nach außen erstreckt. Jedes der beiden Meßspulensysteme besitzt also drei Ausgangsanschlüsse, an denen, wie dies oben unter Bezugnahme auf Fig. 8 erläutert wurde, zwei Signale abgegriffen werden können, deren Differenz repräsentativ für die momentane Stellung der Durchtrittsfläche 64 bezüglich der von den Meßspulen 8, 9 bzw. 8', 9' umschlossenen Flächenelemente 38, 39 bzw. 38', 39' ist. Diese Ausgangsspannungen haben unterschiedliche, bezüglich der geometrischen Drehung um 90° gegeneinander verschobene Werte. Dies bringt zwei Vorteile:

Zum einen können zwei Signaldifferenzen, nämlich die Differenz zwischen den Ausgangssignalen an den Anschlüssen 32, 34 und 33, 34 sowie zwischen den Anschlüssen 32', 34' und 33', 34' gebildet und als für die momentane Stellung repräsentatives Signal fortlaufend bewertet werden. Die oben beschriebenen, additiv aufgeprägten Zusatzspannungen fallen durch die Differenzbildung heraus. Änderungen durch die Erregung und Temperatureffekte können durch Bildung eines Quotienten aus einer dieser Differenzen und einer Meßgröße, die diese Einflüsse enthält und z. B. aus dem Erregerstrom abgeleitet ist, eliminiert werden, so daß diese Störungen keine Rolle mehr spielen. Andererseits besitzt aufgrund der erfindungsgemäßen Anordnung die Signaldifferenz an den Ausgangsanschlüssen 32, 33, 34 gerade immer dann einen besonders linearen Verlauf, wenn sich die Signaldifferenz an den Anschlüssen 32', 33', 34' den nicht mehr ideal linearen Dreiecksspitzen annähert und umgekehrt. Man kann also dadurch, daß man die Ausgangssignale, wie oben erwähnt, mit unterschiedlicher Gewichtung miteinander kombiniert, wobei in das eigentlich auszuwertende Signal immer das Signal besonders stark eingeht, das momentan seinen ideal linearen Bereich durchläuft, während das jeweils andere Signal entsprechend schwächer gewichtet wird, eine weitere Verbesserung der angestrebten optimalen Annäherung des tatsächlichen Kennlinienverlaufs an den durch die Konstruktion vorgegebenen idealen Kennlinienverlauf erreichen.

Auch hier ist es möglich, so wie dies oben beschrieben wurde, den jeweils mittleren Anschlußleiter 34, 34' auf die den Anschlußleitern 32, 33 bzw. 32', 33' gegenüberliegende Platinenseite zu führen und dort so breit auszugestalten, daß er den Abstandsstreifen zwischen den beiden zugehörigen anderen Anschlußleitern vollständig überdeckt.

Eine andere, in den Figuren nicht gezeigte Möglichkeit, bei einem Drehgeber eine möglichst große geometrische Symmetrie der Meß- und Ausgleichswege zu erzielen, besteht darin, die Ausführungsform der Fig. 3 und 4 so abzuwandeln, daß die beiden Halbzylinderwände 58, 59 entweder den gleichen Innen- oder den gleichen Außenradius besitzen, aber eine von ihnen in radialer Richtung dicker als die andere ist, sodaß sie eine breitere Stirnfläche 62 bzw. 63 aufweist. Die Meßspulen werden dann so ausgebildet und angeordnet, daß sie zwar von Teilen der breiten, nicht aber der schmalen Stirnflächen überstrichen werden können.

## Patentansprüche

1. Induktiver Stellungsgeber (1; 50; 85; 125) zur Überwachung der Stellung, die der eine von zwei gegeneinander bewegbaren Körpern bezüglich des anderen einnimmt, mit
- wenigstens einer Erregerspule (6; 53; 90), die zur Erzeugung eines magnetischen Flusses mit Wechselstrom gespeist wird,
- einer Meßspulenanordnung (8, 9; 8', 9'; 54, 55, 56, 57; 94, 95), die wenigstens ein von wenigstens einer Meßspulenwindung umschlossenes Flächenelement (38, 39; 38', 39'; 107, 108) aufweist,
und
- einer Fluß-Führungsvorrichtung (3, 4; 51, 52; 87, 88; 126, 128) aus ferromagnetischem Material, die für den von der Erregerspule (6; 53; 90) erzeugten Magnetfluß einen ringförmig geschlossenen Weg, der Meßweg, vorgibt, der wenigstens einen Spalt (47; 70, 71; 121) umfaßt, dessen einander gegenüberliegende Wandflächen den zwischen ihnen übertretenden Magnetfluß stellungsunabhängig in einem Raumbereich konzentrieren, der die Fläche des wenigstens einen Flächenelementes (38, 39; 38', 39'; 107, 108) in einer Durchtrittsfläche schneiden kann, die in Abhängigkeit von der Bewegung des einen der beiden Körper gegen den anderen gegen das wenigstens eine Flächenelement (38, 39; 38', 39'; 107, 108) verschiebbar ist, wobei Größe und Form der Durchtrittsfläche und des wenigstens einen Flächenelementes (38, 39; 38', 39'; 107, 108) so aufeinander abgestimmt sind, daß sich der Magnetfluß, der das wenigstens eine Flächenelement (38, 39; 38', 39'; 107, 108) durchsetzt, aufgrund dieser Verschiebung ändert, so daß die Meßspule (8, 9; 8', 9'; 54, 55, 56, 57; 94, 95) ein elektrisches Ausgangssignal liefert, das die Stellung des einen der beiden Körper bezüglich des anderen wiedergibt,
dadurch **gekennzeichnet**,
- daß die Fluß-Führungsvorrichtung (3, 4; 51, 52; 87, 88; 126, 128) wenigstens einen weiteren ringförmig geschlossenen Weg, der Ausgleichsweg, vorgibt, der gemeinsam mit dem Meßweg den von der Erregerspule (6; 53; 90) erzeugten Gesamt-Magnetfluß in wenigstens zwei Teil-Magnetflüsse aufteilt, die stellungsunabhängig zumindest in etwa gleich sind, und daß der Ausgleichsweg den ihn durchsetzenden Magnetfluß an dem wenigstens einen Flächenelement (38, 39; 38', 39'; 107, 108), das vom Magnetfeld des Meßweges durchsetzt werden kann, vorbeiführt.

2. Stellungsgeber nach Anspruch 1, dadurch **gekennzeichnet**, daß sowohl der den Meßweg als auch der den wenigstens einen Ausgleichsweg durchsetzende Teil-Magnetfluß jeweils stellungsunabhängig konstant ist.

3. Stellungsgeber nach Anspruch 1 oder 2, dadurch **gekennzeichnet**, daß Meß- und Ausgleichswege im wesentlichen symmetrisch ausgebildet sind.

4. Stellungsgeber nach einem der Ansprüche 1 bis 3, dadurch **gekennzeichnet**, daß Meß- und Ausgleichswege im wesentlichen die gleiche geometrische Konfiguration aufweisen.

5. Stellungsgeber nach einem der Ansprüche 1 bis 4, dadurch **gekennzeichnet**, daß Meß- und Ausgleichswege zumindest abschnittsweise die gleiche Magnetflußdichte aufweisen.

6. Stellungsgeber nach einem der Ansprüche 1 bis 5, dadurch **gekennzeichnet**, daß der wenigstens eine Ausgleichsweg wenigstens einen Spalt (43; 71; 118) umfaßt.

7. Stellungsgeber nach einem der Ansprüche 1 bis 6, dadurch **gekennzeichnet**, daß der Ausgleichsweg bezüglich des Meßweges so angeordnet ist, daß zumindest an den Rändern (48, 49; 78, 79) des Spaltes (47; 70; 121) des Meßweges, die sich bei einer Bewegung des einen der beiden Körper gegen den anderen an eine Randlinie des wenigstens einen Flächenelementes (38, 39; 38', 39'; 107, 108) annähern und/oder über eine solche Randlinie (34, 36; 34', 36') hinwegbewegen können, das Magnetfeld verzerrungsfrei ausgebildet ist.

8. Stellungsgeber nach Anspruch 6 oder 7, dadurch **gekennzeichnet**, daß die einander gegenüberliegenden Wandflächen des im Ausgleichsweg vorgesehenen Spaltes (71) den zwischen ihnen übertretenden Magnetfluß in einem Raumbereich konzentrieren, der die Fläche wenigstens eines weiteren, von einer Meßspulenwindung umschlossenen Flächenelementes in einer Durchtrittsfläche schneiden kann, die in Abhängigkeit von der Bewegung des einen der beiden Körper gegen den anderen gegen das wenigstens eine weitere Flächenelement verschiebbar ist, wobei sich der Magnetfluß, der das wenigstens eine weitere Flächenelement durchsetzt, aufgrund dieser Verschiebung ändert, und daß die von den wenigstens zwei Meßspulenwindungen (56, 57) abgegebenen Signale zur Vergrößerung der Meßsignalamplitude kombiniert werden.

9. Stellungsgeber nach einem der Ansprüche 6 bis 8, dadurch **gekennzeichnet**, daß die Fluß-Führungsvorrichtung (3,4;87,88) aus einem von der Erregerspule (6;90) teilweise umschlossenen Kern (3;87) und einem Joch (4;88) besteht, und daß die Erregerspule (6;90), der Kern (3;87) und die Meßspulenanordnung (8,9;94,95) mit dem einen und das Joch (4;88) mit dem anderen der beiden gegeneinander bewegbaren Körper zumindest in Richtung der zu überwachenden Bewegung unbeweglich verbunden sind.

10. Stellungsgeber nach einem der Ansprüche 1 bis 8, dadurch **gekennzeichnet**, daß die Fluß-Führungsvorrichtung (51,51) einen von der Erregerspule (53) umschlossenen Zapfen (65) umfaßt, der mit einem die wenigstens zwei ringförmig geschlossenen Wege definierenden Rückschlußkörper (60,61,58,59) fest verbunden ist, und daß die Fluß-Führungsvorrichtung (51,51) mit dem einen und die Meßspulenanordnung (54,55,56,57) mit dem anderen der beiden gegeneinander bewegbaren Körper zumindest in Richtung der zu überwachenden Bewegung unbeweglich verbunden ist.

11. Stellungsgeber nach Anspruch 10, dadurch **gekennzeichnet**, daß die Erregerspule (53) mit demjenigen der beiden gegeneinander bewegbaren Körper zumindest in Richtung der zu überwachenden Bewegung unbeweglich verbunden ist, mit dem auch die Meßspulenanordnung (54,55,56, 57) verbunden ist.

12. Stellungsgeber nach einem der Ansprüche 1 bis 11, dadurch **gekennzeichnet**, daß das wenigstens eine Flächenelement (38, 39) der Meßspulenanordnung und die durch die Wandflächen (47a, 47a; 62, 62) des Spaltes (47; 70) definierte Durchtrittsfläche die gleiche Form aufweisen und so angeordnet sind, daß ihre Randlinien zumindest näherungsweise zueinander parallel verlaufen.

13. Stellungsgeber nach einem der Ansprüche 1 bis 11, dadurch **gekennzeichnet**, daß das wenigstens eine Flächenelement (38, 39) der Meßspulenanordnung senkrecht zu der Richtung, in der sich die Durchtrittsfläche gegen das Flächenelement (38, 39) verschiebt, größere Abmessungen als die Durchtrittsfläche aufweist.

14. Stellungsgeber nach einem der Ansprüche 1 bis 13, dadurch **gekennzeichnet**, daß Leiterabschnitte (34,36) der Meßspulenanordnung (8,9) die ein Flächenelement (38,39) begrenzen und so angeordnet sind, daß sich die Durchtrittsfläche aufgrund der zu überwachenden Bewegung an sie annähern und/oder über sie hinwegbewegen kann, senkrecht zur Bewegungsrichtung der Durchtrittsfläche verlaufen.

15. Stellungsgeber nach einem der Ansprüche 1 bis 14, dadurch **gekennzeichnet**, daß Leiterabschnitte (34,36) der Meßspulenanordnung (8,9), die ein Flächenelement begrenzen und so angeordnet sind, daß sich die Durchtrittsfläche aufgrund der zu überwachenden Bewegung an sie annähern und/oder über sie hinwegbewegen kann, vollständig von ferromagnetischem Material umgeben sind.

16. Stellungsgeber nach einem der Ansprüche 1 bis 15, dadurch **gekennzeichnet**, daß in dem Spalt (47; 121), in dessen Bereich das wenigstens eine Flächenelement (38, 39; 107, 108) angeordnet ist, ein von dem Flächenelement (38, 39; 107, 108) umschlossener, gegen die Meßspulenanordnung (8, 9; 94, 95) unbeweglicher Körper (20; 99) aus ferromagnetischem Material vorgesehen ist.

17. Stellungsgeber nach einem der Ansprüche 1 bis 16, dadurch **gekennzeichnet**, daß die Meßspulenanordnung (8, 9) wenigstens zwei einander benachbarte, jeweils von wenigstens einer Meßspulenwindung umschlossene Flächenelemente (38, 39) aufweist, deren Flächen von der Durchtrittsfläche in variabler Weise überdeckt werden können, wobei Größe und Form der Durchtrittsfläche und der wenigstens zwei Flächenelemente (38, 39) so aufeinander abgestimmt sowie die gegenseitige Lage der wenigstens zwei Flächenelemente (8, 9) so gewählt sind, daß aufgrund dieser Verschiebung der Magnetfluß durch das eine Flächenelement (38, 39) zunimmt, wenn der Magnetfluß durch das andere Flächenelement (39, 38) abnimmt und umgekehrt, so daß die Meßspulenwindungen Ausgangssignale liefern, deren Differenz die Stellung des einen der beiden Körper bezüglich des anderen wiedergibt, und daß wenigstens ein Teilstück der Randlinie des einen der wenigstens zwei Flächenelemente (38, 39) als Feldteilungssteg auch ein Teilstück der Randlinie des anderen Flächenelementes bildet, und daß sich die Durchtrittsfläche aufgrund der zu überwachenden Bewegung über dieses beiden Randlinien gemeinsame Teilstück hinwegverschieben kann.

## Claims

1. An inductive position indicator (1; 50; 85; 125) for monitoring the position which is occupied by one of two mutually movable bodies with respect to the other, comprising:
- at least one exciter coil (6; 53; 90) which is fed with alternating current to generate a magnetic flux,
- a measurement coil arrangement (8, 9; 8', 9'; 54, 55, 56, 57; 94, 95) which has at least one surface element (38, 39; 38', 39'; 107, 108) enclosed by at least one measurement coil turn, and
- a flux guide means (3, 4; 51, 52; 87, 88; 126, 128) of ferromagnetic material, which predetermines for the magnetic flux generated by the exciter coil, an annularly closed path, the measurement path, which includes at least one gap (47; 70, 71; 121) of which the mutually oppositely disposed wall surfaces concentrate the magnetic flux crossing over between them in dependence on position in a spatial region which can intersect the surface of the at least one surface element (38, 39; 38', 39'; 107, 108) in a transit surface which is displaceable in dependence on the movement of one of the two bodies relative to the other, with respect to the at least one surface element (38, 39; 38', 39'; 107, 108), wherein the size and shape of the transit surface and the at least one surface element (38, 39; 38', 39', 107, 108) are so matched to each other that the magnetic flux which passes through the at least one surface element (38, 39; 38', 39'; 107, 108) changes by virtue of said displacement so that the measurement coil (8, 9; 8', 9'; 54, 55, 56, 57; 94, 95) supplies an electrical output signal which reproduces the position of one of the two bodies relative to the other,
characterised in that
- the flux guide means (3, 4; 51, 52; 87, 88; 126, 128) predetermines at least one further annularly closed path, the compensating path, which jointly with the measurement path divides the total magnetic flux produced by the exciter coil (6; 53; 90) into at least two magnetic flux portions which independently of position are at least approximately equal, and that the compensating path carries the magnetic flux passing therethrough, past the at least one surface element (38, 39; 38', 39'; 107, 108) through which the magnetic flux of the measurement path can pass.

2. A position indicator as set forth in claim 1 characterised in that both the magnetic flux portion passing through the measurement path and that passing through the at least one compensating path are each constant independently of position.

3. A position indicator as set forth in claim 1 or claim 2 characterised in that the measurement and compensating paths are substantially of a symmetrical configuration.

4. A position indicator as set forth in one of claims 1 to 3 characterised in that the measurement and compensating paths are substantially of the same geometrical configuration.

5. A position indicator as set forth in one of claims 1 to 4 characterised in that the measurement and compensating paths have the same magnetic flux density at least in a portion-wise manner.

6. A position indicator as set forth in one of claims 1 to 5 characterised in that the at least one compensating path includes at least one gap (43; 71; 118).

7. A position indicator as set forth in one of claims 1 to 6 characterised in that the compensating path is so arranged relative to the measurement path that the magnetic field is distortion-free at least at the edges (48, 49; 78, 79) of the gap (47; 70; 121) of the measurement path, which, upon a movement of one of the two bodies relative to the other, can move towards an edge line of the at least one surface element (38, 39; 38', 39'; 107, 108) and/or can move over such an edge line (34, 36; 34', 36').

8. A position indicator as set forth in claim 6 or claim 7 characterised in that the mutually oppositely disposed wall surfaces of the gap (71) in the compensating path concentrate the magnetic flux which crosses over between them, in a spatial region which can intersect the surface of at least one further surface element which is enclosed by a measurement coil turn, in a transit surface which is displaceable in dependence on the movement of one of the two bodies relative to the other, with respect to the at least one further surface element, wherein the magnetic flux which passes through the at least one further surface element changes by virtue of said displacement, and that the signals outputted by the at least two measurement coil turns (56, 57) are combined to increase the measurement signal amplitude.

9. A position indicator as set forth in one of claims 6 to 8 characterised in that the flux guide means (3, 4; 87, 88) comprises a core (3; 87) partially enclosed by the exciter coil (6; 90), and a yoke (4; 88), and that the exciter coil (6; 90), the core (3; 87) and the measurement coil arrangement (8, 9; 94, 95) are connected to one of the two mutually movable bodies immovably at least in the direction of the movement to be monitored, and the yoke (4; 88) is connected to the other of the two bodies immovably at least in the direction of said movement.

10. A position indicator as set forth in one of claims 1 to 8 characterised in that the flux guide means (51, 51) includes a projection (65) which is enclosed by the exciter coil (53) and which is fixedly connected to a return body (60, 61, 58, 59) defining the at least two annularly closed paths, and that the flux guide means (51, 51) is connected to one of the two mutually movable bodies immovably at least in the direction of the movement to be monitored, and the measurement coil arrangement (54, 55, 56, 57) is connected to the other of the two bodies immovably at least in the direction of said movement.

11. A position indicator as set forth in claim 10 characterised in that the exciter coil (53) is connected immovably at least in the direction of the movement to be monitored, to that one of the two mutually movable bodies to which the measurement coil arrangement (54, 55, 56, 57) is also connected.

12. A position indicator as set forth in one of claims 1 to 11 characterised in that the at least one surface element (38, 39) of the measurement coil arrangement and the transit surface defined by the wall surfaces (47a, 47a; 62, 62) of the gap (47; 70) are of the same shape and are so arranged that their edge lines extend at least approximately parallel to each other.

13. A position indicator as set forth in one of claims 1 to 11 characterised in that the at least one surface element (38, 39) of the measurement coil arrangement is of larger dimensions than the transit surface, perpendicularly to the direction in which the transit surface is displaced relative to the surface element (38, 39).

14. A position indicator as set forth in one of claims 1 to 13 characterised in that conductor portions (34, 36) of the measurement coil arrangement (8, 9), which define a surface element (38, 39) and which are so arranged that, by virtue of the movement to be monitored, the transit surface can approach them and/or move over them, extend perpendicularly to the direction of movement of the transit surface.

15. A position indicator as set forth in one of claims 1 to 14 characterised in that conductor portions (34, 36) of the measurement coil arrangement (8, 9), which define a surface element and which are so arranged that, by virtue of the movement to be monitored, the transit surface can approach them and/or can move over them, are completely surrounded by ferromagnetic material.

16. A position indicator as set forth in one of claims 1 to 15 characterised in that provided in the gap (47; 121) in the region of which the at least one surface element (38, 39; 107, 108) is disposed, there is a body (20; 99) of ferromagnetic material which is enclosed by the surface element (38, 39; 107, 108) and which is immovable relative to the measurement coil arrangement (8, 9; 94, 95).

17. A position indicator as set forth in one of claims 1 to 16 characterised in that the measurement coil arrangement (8, 9) has at least two mutually adjacent surface elements (39, 39) which are each enclosed by at least one respective measurement coil turn and the surfaces of which can be variably covered by the transit surface, wherein the size and shape of the transit surface and the at least two surface elements (38, 39) are so matched to each other and the mutual positions of the at least two surface elements (8, 9) are so selected, that, by virtue of said displacement, the magnetic flux through the one surface element (38, 39) increases when the magnetic flux through the other surface element (39; 38) decreases and vice-versa so that the measurement coil turns supply output signals whose difference reproduces the position of one of the two bodies relative to the other, and that at least a portion of the edge line of the one of the at least two surface elements (38, 39) as a field division web portion also forms a portion of the edge line of the other surface element, and that the transit surface can move by virtue of the movement to be monitored over said portion which in common to both edge lines.

## Revendications

1. Transducteur de position inductif (1 ; 50 ; 85 ; 125) pour surveiller la position qu'occupe un corps parmi deux corps déplaçables l'un par rapport à l'autre, relativement à l'autre corps, avec
- au moins une bobine d'excitation (6 ; 53 ; 90), qui est alimentée en courant alternatif pour produire un flux magnétique,
- un arrangement de bobine de mesure (8, 9 ; 8', 9'; 54, 55, 56, 57 ; 94, 95), qui présente au moins un élément de surface (38, 39 ; 38', 39'; 107, 108) entouré par au moins une spire de bobine de mesure, et
- un dispositif de guidage de flux (3, 4 ; 51, 52 ; 87, 88 ; 126, 128) en matériau ferromagnétique, qui présente un chemin fermé annulaire, le chemin de mesure, pour le flux magnétique produit par la bobine d'excitation (6 ; 53 ; 90), ledit chemin comprenant au moins une fente (47 ; 70, 71 ; 121), dont les surfaces de parois opposées concentrent dans une zone d'espace le flux magnétique passant entre elle indépendamment de la position, ladite zone d'espace pouvant coupée la surface dudit au moins un élément de surface (38, 39 ; 38', 39' ; 107, 108) dans une surface de passage qui est déplaçable en fonction du déplacement d'un des deux corps par rapport à l'autre vers ledit au moins un élément de surface (38, 39 ; 38', 39' ; 107, 108), la dimension et la forme de la surface de passage et dudit au moins un élément de surface (38, 39 ; 38', 39' ; 107, 108) étant adaptées l'une à l'autre de telle sorte que le flux magnétique qui traverse ledit au moins élément de surface (38, 39 ; 38', 39' ; 107, 108) varie en raison de ce déplacement de telle sorte que la bobine de mesure (8, 9 ; 8', 9' ; 54, 55, 56, 57 ; 94, 95) délivre un signal de sortie électrique, qui reproduit la position d'un des deux corps par rapport à l'autre,
caractérisé en ce que,
- le dispositif de guidage de flux (3, 4 ; 51, 52 ; 87, 88 ; 126, 128) présente au moins un autre chemin fermé annulaire, le chemin de compensation, qui ensemble avec le chemin de mesure divise le flux magnétique global produit par la bobine d'excitation en au moins deux flux magnétiques partiels, qui indépendamment de la position, sont au moins environ égaux, et en ce que le chemin de compensation fait passer le flux magnétique qui le traverse devant ledit au moins un élément de surface (38, 39 ; 38', 39' ; 107, 108), qui peut être traversé par le champ magnétique du chemin de mesure.

2. Transducteur de position selon la revendication 1, caractérisé en ce que aussi bien le flux magnétique partiel traversant le chemin de mesure que le flux magnétique partiel traversant ledit au moins un chemin de compensation sont respectivement constants indépendamment de la position.

3. Transducteur de position selon la revendication 1 ou 2, caractérisé en ce que les chemins de mesure et de compensation sont réalisés de manière sensiblement symétrique.

4. Transducteur de position selon une des revendications 1 à 3, caractérisé en ce que les chemins de mesure et de compensation présentent sensiblement la même configuration géométrique.

5. Transducteur de position selon une des revendications 1 à 4, caractérisé en ce que les chemins de mesure et de compensation présentent au moins par section la même densité de flux magnétique.

6. Transducteur de position selon une des revendications 1 à 5, caractérisé en ce que ledit au moins un chemin de compensation comporte au moins une fente (43 ; 71 ; 118).

7. Transducteur de position selon une des revendications 1 à 6, caractérisé en ce que le chemin de compensation est disposé par rapport au chemin de mesure de telle sorte qu'au moins au bord (48, 49 ; 78, 79) de la fente (47 ; 70 ; 121) du chemin de mesure, qui, lors d'un déplacement d'un des corps par rapport à l'autre, peuvent se rapprocher et/ou s'éloigner d'une ligne de bord dudit au moins un élément de surface (38, 39 ; 38', 39' ; 107, 108), le champ magnétique est formé sans distorsion.

8. Transducteur de position selon la revendication 6 ou 7, caractérisé en ce que les surfaces de parois opposées de la fente (71) prévue dans le chemin de compensation concentre le flux magnétique passant entre elles dans une zone d'espace qui peut couper la surface d'au moins un autre élément de surface entouré par une spire de bobine de mesure dans une surface de passage, qui est déplaçable en fonction du déplacement d'un des deux corps par rapport à l'autre vers ledit au moins un autre élément de surface, le flux magnétique, qui traverse ledit au moins un autre élément de surface, variant en raison de ce déplacement, et en ce que les signaux produits par lesdits au moins deux spires de bobine de mesure (56, 57) sont combinés pour amplifier l'amplitude du signal de sortie.

9. Transducteur de position selon une des revendications 6 à 8, caractérisé en ce que le dispositif de guidage de flux (3, 4 ; 87, 88) est constitué d'un noyau entouré partiellement par la bobine de mesure (6 ; 90) et une culasse (4 ; 88) et en ce que la bobine d'excitation (6 ; 90) le noyau (3 ; 87) et l'arrangement de bobine de mesure (8, 9 ; 94, 95), sont reliés de manière statique avec l'un et la culasse (4 ; 88) est reliée de manière statique avec l'autre des deux corps déplaçables l'un par rapport à l'autre au moins en direction du déplacement à surveiller.

10. Transducteur de position selon l'une des revendications 1 à 8, caractérisé en ce que le dispositif de guidage de flux (51, 51) comprend un bouchon (65) entouré par la bobine d'excitation (53) qui est relié fixement avec un corps de retour (60, 61, 58, 59) définissant lesdits au moins deux chemins fermés annulaires, et en ce que le dispositif de guidage de flux (51, 51) est relié de manière statique avec l'un et l'arrangement de bobine de mesure (54, 55, 56, 57) est relié de manière statique avec l'autre des deux corps déplaçables l'un par rapport à l'autre au moins dans la direction du déplacement à surveiller.

11. Transducteur de position selon la revendication 10, caractérisé en ce que la bobine d'excitation (53) est reliée de manière statique avec l'un des deux corps déplaçables l'un par rapport à l'autre au moins dans la direction du déplacement à surveiller, avec lequel l'arrangement de bobine de mesure (54, 55, 56, 57) est également relié.

12. Transducteur de position selon l'une des revendications 1 à 11, caractérisé en ce que ledit au moins un élément de surface (38, 39) de l'arrangement de bobine de mesure et la surface de passage définie par les surfaces de parois (47a, 47a ; 62, 62) de la fente (47 ; 70) présentent la même forme et sont disposés de telle manière que leurs lignes de bord s'étendent au moins environ parallèlement l'une à l'autre.

13. Transducteur de position selon l'une des revendications 1 à 11, caractérisé en ce que ledit au moins un élément de surface (38, 39) de l'arrangement de bobine de mesure présente perpendiculairement à la direction dans laquelle la surface de passage se déplace vers l'élément de surface (38, 39), des dimensions supérieures que la surface de passage.

14. Transducteur de position selon l'une des revendications 1 à 13, caractérisé en ce que des sections de conducteurs (34, 36) de l'arrangement de bobine de mesure (8, 9), qui délimitent un élément de surface (38, 39) et qui sont disposées de telle manière que la surface de passage en raison du déplacement à surveiller peut s'en rapprocher et/ou passer par dessus elles, s'étendent perpendiculairement à la direction de déplacement de la surface de passage.

15. Transducteur de position selon l'une des revendications 1 à 14, caractérisé en ce que les sections de conducteurs (34, 36) de l'arrangement de bobine de mesure (8, 9), qui délimitent un élément de surface et qui sont disposées de telle sorte que les surfaces de passage en raison du déplacement à surveiller peut s'en rapprocher et/ou passer par dessus elles, sont entièrement entourées par un matériau ferromagnétique.

16. Transducteur de position selon l'une des revendications 1 à 15, caractérisé en ce que dans la fente (47 ; 121), dans la zone de laquelle ledit au moins un élément de surface (38, 39 ; 107, 108) est disposé, est prévu un corps en matériau ferromagnétique (20 ; 99) statique par rapport à l'arrangement de bobine de mesure (8, 9 ; 94, 95) entouré par l'élément de surface (38, 39 ; 107, 108).

17. Transducteur de position selon l'une des revendications 1 à 16, caractérisé en ce que l'arrangement de bobine de mesure (8, 9) présente au moins deux éléments de surface (38, 39) voisins entourés respectivement par au moins une spire de bobine de mesure, dont les surfaces peuvent être recouvertes par la surface de passage de manière variable, la dimension et la forme de la surface de passage et desdits au moins deux éléments de surface (38, 39) étant adaptées l'une à l'autre de même que la position mutuelle desdits au moins deux éléments de surface (8, 9) est choisie de telle sorte qu'en raison de ce déplacement, le flux magnétique augmente à travers un élément de surface (38, 39), lorsque le flux magnétique diminue à travers l'autre élément de surface (38, 39) et inversement, de telle sorte que les spires de bobine de mesure délivrent des signaux de sortie dont la différence reproduit la position d'un des deux corps par rapport à l'autre, et qu'au moins un tronçon de la ligne de bord dudit un parmi lesdits au moins deux éléments de surface (38, 39) forme en tant que nervure de division de champ également un tronçon de la ligne de bord de l'autre élément de surface, et que la surface de passage, en raison du déplacement à surveiller, peut être déplacée par dessus ce tronçon commun aux deux lignes de bord.
